# EUROPEAN PATENT APPLICATION

(11) **EP 4 401 396 A1**
(43) Date of publication of application: **17.07.2024**
(21) Application number: 22863634.6
(22) Date of filing: 02.09.2022
(51) Int. Cl.: H04M 11/04, H04M 1/725

(54) **METHOD FOR REALIZING FULLY INTELLIGENT SECURITY-PROTECTING MOBILE PHONE**

(30) Priority: 06.09.2021 CN 202111040462; 11.10.2021 CN 202111184038
(71) Applicant: Xie, Wenwu, Shenzhen, Guangdong 518000 (CN)
(72) Inventor: Xie, Wenwu, Shenzhen, Guangdong 518000 (CN)
(74) Representative: Mirlach, Xiaolu
(86) International application number: PCT/CN2022/116834
(87) International publication number: WO 2023/030500

(57) **Abstract**

Disclosed in the present invention is a method for realizing a fully intelligent security-protecting mobile phone which a user does not need to worry about losing or having stolen. A comprehensive technical solution for comprehensively realizing mobile phone security and mobile phone early-warning is created by means of assuming illegal possession and usage of a stolen or lost mobile phone, so as to achieve the technical effects of a user being free from worrying about theft or loss of a mobile phone, and performing intelligent defense. The implementation idea of the method comprises a plurality of logically innovative technical means, such that the defects and mistakes of an existing mobile phone loss report anti-theft technique are overcome. By means of software programming and the improvement of a related terminal device, information in a mobile phone can be more secure, and the mobile phone can be used more conveniently and quickly; moreover, a legal user of the mobile phone can also obtain more types of information of an illegal user of the mobile phone, and use the automated running of a corresponding program by the mobile phone and a remote control operation of a system for a lost mobile phone to make the illegal user thoroughly abandon the idea of seizing the stolen or lost mobile phone, thereby eradicating theft in the field of mobile phones.

## Description

The present application claims priority of the Chinese patent application No. 202111040462.2 submitted to the China National Intellectual Property Administration on September 06, 2021, in the title of "Mobile phone and system that can be automatically bound, quickly registered, and secretly report loss and theft"; claims in-part priority of the Chinese patent application No. 202111184038.5 submitted to the China National Intellectual Property Administration on October 11, 2021, in the title of "Fully intelligent and secure mobile phone prevented from being stolen and lost and anti-theft user card".

### TECHNICAL FIELD

The present disclosure relates to a field of a fully intelligent and secure mobile phone prevented from being stolen and lost, and in particular to reporting loss of a mobile phone, anti-theft of the mobile phone, protecting privacy of an owner of the mobile phone, personal protection, and new applications related thereto. The present disclosure relates to combination of a series of inventive technical solutions.

### BACKGROUND

Currently, a mobile phone has been the most important device carried by a person. Once the mobile phone is lost or stolen, a lot of troubles may be brought to the owner. Therefore, various technologies related to security of the mobile phone is being developed constantly. However, compared to other technologies of mobile phone, technologies related to security of the mobile phone is relatively lagging behind.

### SUMMARY OF THE DISCLOSURE

### Technical problem

In the art, for the security of the mobile phone, locating the mobile phone based on a cloud account is applied. For some mobile phones, changing a card and reporting loss of the mobile phone, capturing and uploading images, locking the mobile phone and switching the mobile phone into a brick, and other technologies are applied. However, when the mobile phone is illegally taken to a place farther away and when illegal possession or more information about the owner of the mobile phone cannot be obtained, the owner of the stolen mobile phone does not have any measure based on the above technologies, such that the stolen or lost mobile phone cannot be recovered easily.

In addition, security technologies and related functions of the mobile phone are achieved by performing complex processes and have poor privacy and complicated interfaces and menus. Data of the mobile phone may be wiped easily. A probability of finding the mobile phone may be low. Non-harassment effect is not satisfactory. A probability of finding the lost mobile phone is very slim. Important security functions of the mobile phone and the card of the mobile phone can be missed to be set easily. Once the mobile phone is lost, even when a person found the mobile phone and would like give the mobile phone back to the owner, it may be difficulty for the person to proactively contact the owner of the mobile phone. Due to the above technical problems, a thief or an illegal user of the mobile phone would like to take a chance to try various ways to illegally take over or even steal the mobile phone and carry out all kinds of telephone harassment.

### Technical solution

The present disclosure provides an implementation method of a fully intelligent and secure mobile phone prevented from being stolen and lost.

The mobile phone is arranged with a built-in user card and/or is fixedly arranged with an anti-withdrawal user card mechanism. The implementation method includes: guiding a user to set a plurality of relevant passwords or set one password synchronized to various relevant functions; guiding the user to quickly register a cloud account and log in a mobile terminal of the cloud account (the cloud account is registered on other devices of a same brand of the mobile phone); and/or guiding the user to quickly bind an emergent loss reporting number and starting a corresponding intelligent loss reporting operating system.

According to the above implementation method, the built-in user card of the mobile phone includes a physical user card or a virtual user card. The anti-withdrawal user card mechanism that is fixedly arranged in the mobile phone includes a mechanical anti-withdrawal user card mechanism for the physical user card or an electrically-operated anti-withdrawal user card mechanism for the physical user card. The fully intelligent and secure mobile phone includes a fully intelligent and secure mobile phone having the physical user card, a fully intelligent and secure mobile phone having the virtual user card, a fully intelligent and secure mobile phone having both the physical user card and the virtual user card, or a fully intelligent and secure mobile phone having two separated card trays.

According to the above implementation method, for the operation of guiding the user to set the plurality of passwords or set one password synchronized to a plurality of relevant functions, the set password includes a first one, first two, more than two or all of the following items: a screen locking password, a cloud account password, a password of a mobile phone account, a PIN password, a switching-off password, a wiping password, a password for disassembling the mobile phone, a legal card-replacement password. The password setting is performed once to set one password for the plurality of functions (a switching-off menu, a data wiping menu, a phone disassembling menu, a legal card-replacement menu, and other menus may be in a privacy interface subordinating to the screen locking password). The password includes: a numeric and pattern password, an alphabetic-numeric password, and other passwords; and fingerprint data, face data, and other biometrically unique data.

According to the above implementation method, the above various passwords can be classified into a primary password, a secondary password, and so on.

According to the above implementation method, the operations of guiding the user to set the plurality of passwords or set one password synchronized to a plurality of relevant functions; guiding the user to quickly register the cloud account (and log in the mobile terminal of the cloud account); and/or guiding the user to quickly bind the emergent loss reporting number are performed when the mobile phone is switched on and is used for the first time. The operation of guiding the user to set the password(s) may alternatively be performed when the mobile phone is switched on and has been activated (after the mobile phone, which is arranged with the virtual user card without any physical card tray, is written with codes).

According to the above implementation method, preferably, two emergency loss reporting numbers are needed. One of the two emergency loss reporting numbers is a contact number of a close kin that the user needs to input; and the other of the two emergency loss reporting numbers is a contact number of a watch or a tablet computer of the owner of the mobile phone. Another two emergency loss reporting numbers may further be added. One of the another two emergency loss reporting numbers is a contact number of another close kin, and the other of the another two emergency loss reporting numbers is a contact number that is used by the instant mobile phone to register the cloud account and is obtained automatically by the mobile phone. The emergency loss reporting numbers are synchronized or partially synchronized with a verification number and a warning number.

According to the implementation method, the corresponding intelligent loss reporting operating system includes one, two, more than two, or all of: a loss reporting program when the mobile phone being abnormally used; a secret loss reporting program when a battery power of the mobile phone is less than a threshold, a loss reporting program for preventing the mobile phone from being wiped, a loss reporting program for preventing the mobile phone from being dissembled; an automatic loss reporting program for preventing the user card of the mobile phone from being illegally withdrawn and replaced, a loss reporting program when the mobile phone is reported as being lost, a delayed switching-off program or a pseudo switching-off program of the mobile phone; and a loss reporting program without switching off.

According to the implementation method, after the mobile phone completes the above-described setting, the mobile phone initiates the loss reporting program of the intelligent loss reporting operating system correspondingly when the mobile phone is determined as being abnormally used or being lost.

To be noted that, the loss reporting program included in the intelligent loss reporting operating system in the present disclosure is not limited to the above loss reporting programs. The above loss reporting programs are only a few typical implementations for achieving the present disclosure.

According to the above implementation method, furthermore, with the corresponding intelligent loss reporting operating system, only when the mobile phone is decrypted or the screen of the mobile phone is unlocked, the mobile phone may be switched off legally, wiped legally, disassembled legally, replaced with a new user card legally, restored to manufacturing settings legally and to perform other important functions related to security legally.

According to the above implementation method, furthermore, the corresponding intelligent loss reporting operating system classifies function menus in interfaces of the mobile phone into two classes: public menus (which can be displayed to the illegal user or can also be displayed even when the screen is not unlocked) and undisclosed and private menus (which are not displayed if the screen is not unlocked). A page in which all the public menus are collected is a public interface, and a page in which all the private menus are collected is a private interface. The public interface includes a code of an emergency loss reporting contact number which does not display a real contact number. Alternatively, a first screen of the mobile phone (a first page that is triggered to be displayed when the mobile phone is switched on or is in a standby state) includes a menu icon of the emergency loss reporting contact number and/or related prompts.

According to the above implementation method, furthermore, the corresponding intelligent loss reporting operating system further includes a security warning program and function keys, instructions of a self-installed function, and a program that allows the mobile phone to be remotely manipulated in various ways.

According to the above implementation method, furthermore, after the mobile phone is reported as being lost, privacy of incoming calls recorded in a contact list of the mobile phone is protected.

It is to be explained that the above implementation method is not the only technical solution but is combination of technical solutions having various technical options, which will be described more specifically in the following sections.

The above-mentioned anti-withdrawal user card mechanism can be varied in many ways, which is mainly divided into two categories in addition to a virtual user card without card tray. Among them, the mechanical anti-withdrawal user card mechanism is a mechanism fixed at a withdrawal entrance of the user card tray of the mobile phone to block the tray from being drawn out; the electrically-operated anti-withdrawal user card mechanism is a motorized card tray fixed at a position for arranging the user card. The motorized card tray is controlled by an encrypted menu, and without activating the encrypted menu, the card tray will not be pushed out of the mobile phone.

The essence of the present disclosure aims to provide more effective clues to recover the mobile phone after the mobile phone is lost or stolen. Therefore, the present disclosure provides a method for reporting loss of the mobile phone when the mobile phone is abnormally used. The method is applied to the mobile phone, which has registered with the cloud account, logged in the mobile terminal account (mobile phone location is enabled by default), and/or bound to the loss reporting number. When a password or a fingerprint, which is input when the mobile terminal is in the standby state or is switched on, is different from a pre-stored password or a pre-stored fingerprint; or when the password or the fingerprint is not input within a certain period time (even if the illegal user is alerted, it is still very likely to obtain the face of the illegal user), the mobile phone captures an image secretly and sends the image (which is compressed), the input fingerprint, a voice recording, and a location of the mobile phone, and so on, to the cloud account. Alternatively, when the mobile phone, which has registered the cloud account, logged in the mobile terminal account, and/or bound to the loss reporting number, detects that the input fingerprint or the input password does not match with the pre-stored fingerprint or the pre-stored password or detects that the fingerprint or the password is not input within the certain period of time, the screen of the mobile phone displays the public interface (call records display the code of the emergency contact number only), and at the same time, the mobile phone captures an image secretly and sends (uploads or transmits) information, such as the image, the fingerprint, and the location of the mobile phone, to the cloud account (a time point and a location, which are generated by default when the image is being captured, are not deleted when the loss reporting information is sent).

According to the above implementation method, when the mobile phone secretly needs to capture the image, the mobile phone uses a front camera with priority to capture the image; alternatively, the mobile phone uses the front camera and a rear camera successively to capture the image; alternatively, the mobile phone takes a video.

According to the implementation method, furthermore, when the mobile phone detects that a menu in the public interface is used, the mobile phone secretly captures images at time intervals and sends the captured images and the location of the mobile phone to the cloud account.

According to the above implementation method, furthermore, when the mobile phone detects that the public interface is continuously scrolled; or detects that the fingerprint or the password is input again and still does not match with the pre-stored fingerprint; or detects that the password or is not input within the certain period of time, the mobile phone secretly captures an image; sends the image and the location of the mobile phone to the loss reporting number; and calls the loss reporting number.

According to the above implementation method, furthermore, when the mobile phone detects that a false financial menu in the public interface is clicked, the mobile phone directs the user to enter a mobile phone number for verification; secretly captures an image; and sends the image, the location of the mobile phone, and the input mobile phone number to the cloud account.

In addition, in order to reduce a mis-operation performed by the owner or relatives or friends of the owner, both the operation of secretly capturing the image and the operation of loss reporting in the present technical solution may be performed at a later stage. For example, when the mobile phone, which has registered the cloud account, logged in the mobile terminal account, and/or bound to the loss reporting number, detects that the input fingerprint or the input password is inconsistent with the pre-stored fingerprint or the pre-stored password; or detects that the fingerprint or the password is not input within the certain period of time, the mobile phone displays the public interface and does not perform the operation of secretly capturing the image and sending the image and the location of the mobile phone to the cloud account. Instead, when the mobile phone detects that the public interface has been continuously scrolled; or detects that the fingerprint or the password that is input again is still inconsistent with the pre-stored fingerprint and the pre-stored password; or detects that the fingerprint or the password is not input within the certain period of time, the mobile phone secretly captures the image and sends the image and the location of the mobile phone to the cloud account, and in this case, the mobile phone still displays the public interface. At this moment or subsequently, when the mobile phone detects that the menu of the public interface is being used, the mobile phone secretly captures images at time intervals; sends the captured images and the location of the mobile phone to the loss reporting number; and calls the loss reporting number.

When an ultrasonic palm print sensor or an infrared palm vein sensor is arranged at a rear of the mobile phone, palm print recognition or palm vein recognition, due to be being performed more maturely, is used to replace fingerprint recognition or finger vein recognition. In this case, the palm recognition, image capturing, and loss reporting can be performed as naturally and smoothly as the face recognition, image capturing, and loss reporting in the present disclosure, which does not allow the illegal user to be aware of.

For the technical principle of the present technical solution, even when the screen unlocking password is input wrong or is not input within the certain period of time, the public menus or the public interface of the mobile phone are displayed, such that an opportunity of obtaining more information about the illegal user is available. In the present technical solution, when the correct screen unlocking password is not input, the private menus or contents of the mobile phone that carry private information are never displayed.

Furthermore, even when the screen unlocking password is input wrong or is not input within the certain period of time, the public menus of the mobile phone are displayed, and a private menu or an application to which private information has not been input can be displayed, such as an unused QQ, an unused WeChat, and so on. However, once the private menu is used, information generated during a previous usage is left in the private menu (or the information may not enter the private menu; a preferred embodiment is that the private menu is entered to prevent the legal owners from overacting), and the private menu is displayed only after the correct screen unlocking password is input.

The philosophy of the present technical solution is to let the illegal user be off in order to catch the illegal use later. The concept of the present technical solution is to allow the lost or stolen mobile phone to be able to be used by the illegal user, such that more clues can be obtained, however, the privacy of the owner and security of the mobile phone must be protected. Benefits of the present technical solution are already self-evident, i.e., a probability of recovering the lost mobile phone is improved significantly.

According to the above implementation method, loss reporting, which is caused by attempts to unlock the screen based on the face recognition but has reduced mistaken image capturing, is preferred. The present disclosure is applied to the mobile phone, which has registered the cloud account, logged in the mobile terminal account (the mobile phone location is activated by default), and/or bound with the loss reporting number (including email), and has recorded face data for recognition in the locking interface. In the standby state, when a power key or a HOME key of the mobile phone is pressed; or when the mobile phone receives an incoming call; or after the mobile phone is switched on, the first screen of the mobile phone is displayed, and the mobile phone enters a face-scanning state. When scanned image data matches with face data that is pre-stored in the mobile phone, the mobile phone does not capture the image or the video and does not perform the loss reporting. Further, the screen of the mobile phone is unlocked, and the mobile phone enters an in-use state; or the mobile phone stays in a state of displaying the first screen. When the scanned image data does not match with the pre-stored face data, or when the face is not scanned within a certain period of time, the mobile phone captures the image or the video; sends the image or the video, an address, and other information; and displays the public interface or enters other states.

For the above in-use state, since accuracy and security of face recognition is lower than the fingerprint recognition or the password recognition, even when the image data scanned by the mobile phone matches with the pre-stored face data, it is preferable that the mobile phone, when entering the in-use state, firstly displays the public interface or a previously-displayed page of the public interface. Subsequently, when the illegal user tries to enter the private interface, the loss reporting, which is caused by attempted fingerprint recognition or attempted password recognition to unlock the screen, is performed.

The other states mentioned in the above may be displaying the first screen or displaying a negative-one screen (such as a quick control center of an iPhone) or displaying a wallpaper of the mobile phone. That is, when the scanned image data does not match with the pre-stored face data or when the face is not scanned within the certain period of time, the mobile phone captures the image and sends the image, the address, and other information to the cloud account or to the loss reporting number; and the screen of the mobile phone is unlocked.

As front dual cameras and 3D face recognition are applied and promoted, accuracy of the face recognition and resolution of a face image captured at a night scene are improved. Other technical solutions of the present disclosure may be more widely implemented individually, compared to the technical solution of reporting loss of the mobile phone based on the face recognition. That is, it is only necessary to add the technical solution of face recognition and sending information for loss reporting to the current related art (which may include unlocking the screen based on the face recognition). To summarize the above technical solutions, a method for achieving anti-theft and loss reporting of the mobile phone based on the face recognition is provided and include following operations.

The user firstly registers the cloud account, and logs in the mobile terminal account, and/or sets the loss reporting number.

Subsequently, screen unlocking information is input to and stored in the mobile phone, and the screen unlocking information includes the face data for recognition.

After completing the above operations, when the power key or the HOME key is pressed, the mobile phone displays the first screen and enters a scanning state.

When the scanned image data matches with the pre-stored face data, the mobile phone does not capture the image or the video for reporting loss of the mobile phone, and the mobile phone enters the in-use state (which can be a displaying state after the screen is unlocked).

When the scanned image data does not match with the pre-stored face data or the face is not scanned within the certain period of the time, the mobile phone captures the image or the video and sends the image, the video, and/or the addresses to the cloud account and/or to the loss reporting number; and the mobile phone stays on the first screen or enters other non-private in-use states.

The non-private in-use state is mainly defined for the owner of the mobile phone. All menus and subordinating contents, which do not contain any private information of the owner, and all pages that affect usage of the mobile phone are defined as non-private pages. The mobile phone displaying any of the non-private pages is referred to as entering the non-private in-use state. When interfaces are not classified into the public interface and the private interface, the non-private in-use state refers to displaying an interface that can be accessed without unlocking the screen. When interfaces are classified into the public interface and the private interface, the non-private in-use state refers to either displaying the interface that can be accessed without unlocking the screen or displaying the public interface that contains the public menus and/or an induced menu. A mobile phone, which does not have the face recognition for loss reporting, needs to be added with the operations of: capturing the image and sending the image photo and the address to the cloud account and/or to the loss reporting number; or secretly capturing an image and secretly sending the image and the address to the cloud account and/or to the loss reporting number, in response to the face data being not matched with the pre-stored face data or the face being not scanned within the certain period of time.

In order to achieve higher security and a better resolution of the image captured in the night scene, the technical solution of reporting loss of the mobile phone based on the face recognition is performed independently, and in this way, all-pixel precise face focus and/or face precise focus thermometry recognition can be achieved.

Since, for most mobile phones, information for unlocking the screen is the face data, the fingerprint data, and the alphabetic-numeric password, a preferred implementation of the method for reporting loss of the mobile phone when the mobile phone is abnormally used is an application combining the face recognition, the fingerprint recognition, and the alphabetic-numeric password recognition.

The face scanning as described in the above is preferably a secret scanning without displaying any scanning identifier on the screen of the mobile phone. The scanned image data is obtained by the mobile phone performing the scanning without displaying the scanning identifier on the screen. Furthermore, no prompt sound is made. When capturing the image, the image is captured secretly where brightness of the screen can be automatically adjusted. For a mobile phone that is not configured with a fingerprint recognition sensor, if the security function is configured, the face data serves as the password to unlock the screen and further serves as the basis for determining whether the mobile phone needs to be reported as being lost. That is, after pressing the power key, the mobile phone displays the first screen is displayed and enters the state of secretly scanning the face. When the scanned image data matches with the face data that has been input and stored in the mobile phone, the mobile phone does not capture any image, does not perform loss reporting, and enters the in-use state. When the scanned image data does not match with the face data that has been stored in the mobile phone or the face scanning is performed not within the certain period of time, the mobile phone secretly captures the image and sends the image and the address to the cloud account or to the loss reporting number; and the first screen is still displayed. When the screen is scrolled, an interface in which the numeric password is to be input to unlock the screen, or the wallpaper of the mobile phone, or the public page of the mobile phone is displayed. When the wallpaper or the public page is displayed, the mobile phone automatically adjusts the brightness of the screen; secretly captures images at time intervals; and sends the images, the address, and other information to the cloud account or to the loss reporting number.

Face scanning and image capturing are described in the above to further clarify that, in the present disclosure, explicit scanning and explicit image capturing are less preferred variations of the secret scanning and secret image capturing but are still within the scope of the present disclosure.

In order to obtain more or clearer images of the illegal user, the mobile phone secretly captures images at time intervals when the illegal user is browsing the public interface or content of the public menu; and sends the images to the cloud account.

In the technical solution in which the mobile phone performs the loss reporting based on the face recognition, pressing the power key, pressing the HOME key, and the mobile phone receiving an incoming call allows the mobile phone to be held by the user hand and to stay static. Further, the mobile phone is faced to the user, and the face scanning is activated. In addition, a sensor is configured to determine whether the mobile phone is faced to any user. The sensor is a special touch pressure sensor and a motion sensor. The touch pressure sensor is disposed on each of two sides of the mobile phone at a position that can be held by the hand of the user (a phone protective case needs to define a hole corresponding to the position). The sensor senses a body temperature and a micro-pressure. When the touch pressure sensor detects data matching with data of hand-holding of the human, data of the motion sensor, data of a tilt sensor, and data of a proximity sensor (recommended to be disposed under the screen, having a proximity distance of 5 cm to 45 cm) are combined with each other to start a corresponding algorithm to determine a possibility of the mobile phone being faced to any user. When the possibility is high, the face scanning is activated.

The above mentioned touch sensor may be equivalent to a palm print sensor or a palm vein sensor, but the palm print sensor or the palm vein sensor needs to be disposed on the rear of the mobile phone that corresponds to the palm of the hand as much as possible.

The special sensor is used to activate the face scanning, and the screen does not display an interface (image capturing effect at the night scene is not ideal). When the scanned face data does not match with the pre-stored face data, the screen still does not display the interface. In this way, the loss reporting based on the face recognition is performed more secretly at a bright scene, and a chance of obtaining more information about the face of the illegal user or the illegal holder is increased. However, the present technical solution, which is equivalent to the loss reporting based on the face recognition and pressing the power key, has a slightly higher cost, and therefore, it is a back-up technical solution.

When comparison between the scanned face data and the pre-stored face data is not considered, and when the mobile phone is in the lost state, the above special sensor is also a technical solution to trigger the mobile phone to perform the loss reporting. That is, after the mobile phone performs the loss reporting to the cloud account, the above-mentioned sensor is used to detect that the mobile phone is being held by the user hand and stays static, and the mobile phone captures the image of the user and performs the loss reporting. In addition, when the mobile phone is in the lost state, and when the mobile phone is detected as being used, the mobile phone also automatically captures an image and sends loss reporting information that includes the image to the cloud account.

The touch pressure sensor of the above special sensor may be replaced with a (concave) pressure-sensitive key (which does not sense the body temperature, and the corresponding position of the protective case does not need to define any hole). In addition, if accuracy of determining the possibility of the phone being faced to any user is not too high, the motion sensor, the tilt sensor, the proximity sensor and the relevant algorithm can be omitted, and the mobile phone is determined as being held by the user and staying static when the pressure-sensitive key is being pressed to reach a threshold time length. In some embodiments, screen displaying based on the tilt sensor is applied (the mobile phone is tilted for a certain angle relative to the horizontal direction) as in iPhone to activate the face recognition. For the image capturing and the loss reporting based on the face scanning and recognition that is triggered by the above sensors, since an error of the face scanning is high, the screen of the mobile phone can be set to be not displayed to save power when the camera is performing the scanning.

For the image capturing and the loss reporting based on the face scanning and recognition that is triggered by pressing the key, although a chance of reporting the loss of the mobile phone is increased, a possibility of the face being unable to be scanned and an image having the face being unable to be captured is relatively high. When a higher possibility of capturing the image having the face is desired, a condition that triggers the face scanning and the image capturing is postponed after the power key is pressed and the screen is displayed. When or after the screen is scrolled (scrolling the first screen, the wallpaper or the public page, the password input page, and so on) or a function menu is clicked, the face scanning is activated, and the loss reporting after the face scanning is activated.

The image capturing and the loss reporting based on the face scanning and recognition is triggered by a plurality of equivalent ways. Therefore, after the key is pressed and the mobile phone is possibly faced to the user, important actions, which must be performed when the screen is certainly faced to the user, are used as a condition to trigger the image capturing and the loss reporting based on the face scanning and recognition. Alternatively, a scanning time length can be prolonged when the user is using the mobile phone to perform a certain process, such that a clearer face can be captured, and loss of mobile phone is reported. Alternatively, during development, a scanning time length for each process is simulated, and a preferred combination of implementations is determined.

Further, a corresponding (gesture) sensor and a high-performance visual sensing algorithm chip are integrated into the front camera to form an intelligent sensing camera to more accurately and intelligently scan the face (intelligent scanning of the face) to report the loss of the mobile phone with the captured image.

It is to be affirmed that the present disclosure does not limit any possible way of triggering the image capturing and the loss reporting based on the face scanning and recognition. That is, camera scanning is activated as long as the mobile phone is in the standby state (including an implicit standby state) and as long as there is a possibility of a human face facing the mobile phone. The face scanning, the image capturing and loss reporting, and/or direct image capturing and loss reporting after the mobile phone is reported as being lost is triggered during various usage stages and is triggered by card withdrawal and replacement, switching down the mobile phone, wiping the mobile phone, disassembling the mobile phone, the screen displaying a lost mode, and displaying an interface for inputting the password or the PIN password to unlock the screen after the mobile phone being re-started. The present disclosure does not limit the front camera or other cameras from taking images of a surrounding environment of the illegal user, including indoor images of the illegal user. However, a preferred method is that the illegal user cannot be aware of the image capturing, and at the same time, a clear face image or video is captured. Further, the number of scanning times and image capturing times are reduced after the clear face image or the clear face video is obtained.

Compared to the numeric password and the loss reporting based on the fingerprint recognition, the secret face recognition and capturing for loss reporting (for example, the mobile phone is tilted with respect to the horizontal direction for a certain angle or the mobile phone detects that a person's face is facing the mobile phone, the face is scanned and the image of the face is captured without displaying anything on the screen and without playing any sound, and loss of the mobile phone is reported) is performed more implicitly, and the chance of obtaining the face image of the illegal user is increased significantly. In this way, the illegal user is almost 100% photographed when the illegal user tries to use or uses the mobile phone, and the illegal user who tries to use or crack the mobile phone is unable to take precautions in time. A face image of the illegal user and an image of the surrounding environment of the illegal user can always be captured even if the illegal user does not touch the fingerprint sensor or does not input the password due to vigilance.

In the fully-intelligent implementation solution, a method of automatic loss reporting after the battery power of the mobile phone falling below a threshold is a very important anti-theft technical solution of the mobile phone. In the present method, after the battery power of the mobile phone, which has registered for the cloud account and logged in the mobile terminal account (mobile phone location being activated by default) and/or bound to the loss reporting number, is detected as being lower than a first threshold, the mobile phone is switched off or enters the standby state in which loss reporting is performed secretly. Alternatively, in a delayed switching-off state, the mobile phone sends information including the location of the mobile phone, the secretly captured image and voice, and so on, to the cloud account.

Further, when the battery power is detected as being less than the first threshold, the mobile phone is automatically switched off several minutes thereafter; is secretly switched on at a time point, and subsequently, sends the loss reporting information to the cloud account and/or to the loss reporting number. Alternatively, the mobile phone is secretly switched on when the mobile phone is being charged, and subsequently, sends the loss reporting information.

The switched off mobile phone is switched on when the power key is pressed. The switched-on mobile phone repeats, in response to the battery power being detected as being less than a second threshold, the above operation that the mobile phone does when the battery power is less than the first threshold.

Alternatively, furthermore, after the mobile phone is secretly switched on, the mobile phone receives an operation command. After being operated, the mobile phone is switched off and/or automatically switched off secretly without making any sound. After the mobile phone is secretly switched on and when the power key is pressed to switch on the mobile phone, the mobile phone explicitly performs loss reporting and is explicitly operated by the user.

The present technical solution considers the battery power of the lost mobile phone, enabling the lost mobile phone to have relatively sufficient battery power to support anti-theft of the mobile phone and support the mobile phone to perform loss reporting. Especially, the lost mobile phone being unable to be secretly switched on at the set time point or switched on based on a Bluetooth command, due to the mobile phone being out of power, can be avoided. When a wireless long-distance charging technology for mobile phones is widely applied, the present technical solution allows the mobile phone to have sufficient battery power for performing important security functions.

The present technical solution is not only applicable to the mobile phone having the physical user card but also applicable to the mobile phone having the virtual user card. In addition, the present technical solution is further applicable to some IoT devices or other electronic products.

To summarize the technical principle or distinctive features of the present technical solution, after the battery power of the mobile phone is lower than the threshold, the mobile phone automatically and secretly performs the loss reporting. For the essence of the present technical solution, when the battery power of the mobile phone is lower than the threshold, the mobile phone is automatically switched off and is switched on at the set time points, or switched on inductively, or switched on based on a low-power consumption and remote control. The essence of the present technical solution can be applied to other new applications.

Although the principle of the present technical solution is simple, the present technical solution is of great significance for the stolen or lost mobile phone to perform loss reporting, for mobile phone warning, and for emergency reporting to the police. Compared to low-power consumption offline searching after the mobile phone is switched off, in the present technical solution, in addition to the location of the mobile phone, more information about the person who illegally holds or uses the mobile phone is obtained. The secret switching on allows the legal owner of the mobile phone to remotely manipulate the lost mobile phone at the set time point, and at the same time, brings psychological shadow and pressure to the illegal user.

The present technical solution also enables the owner of the mobile phone to have a habit of charging the mobile phone in time to achieve more emergency operations, which is beneficial to maintenance of the battery. In the present technical solution, if the mobile phone has a problem of displaying the remaining battery power or other battery problems, two power sources are arranged, or power management based on battery partition is performed. For example, when a battery power is higher than the threshold, the battery power is 100% displayed. When a battery power is lower than the threshold, the battery power is virtualized to be a battery power of a backup battery.

In order to prevent the illegal user from trying to use the mobile phone by wiping the mobile phone, jailbreaking the mobile phone, and reinstalling a system for the mobile phone, an encrypted menu is set in the mobile phone, which has registered for the cloud account and logged in the mobile terminal account (mobile phone location being enabled by default) and/or are bound to the loss reporting number, to allow the mobile phone to be wiped or to allow the mobile phone to be restored to default settings. When a physical key is pressed to try to direct the mobile phone to be wiped or restored to the default settings, the mobile phone captures an image, sends the loss reporting information, and/or enters a secret loss reporting state. After the mobile phone sends the loss reporting information, the mobile phone further displays a warning message or plays a warning sound.

In the present technical solution, attempting to wipe the mobile phone without unlocking the screen or without performing decryption is defined as illegal wiping. When the screen is not unlocked or the mobile phone is not decrypted, the mobile phone is not allowed to enter a wiping mode.

Loss reporting due to illegal wiping is an operation of pressing a key to enter the wiping mode or to restore the mobile phone to the default settings. In this case, the mobile phone enters a secret image-capturing and loss-reporting state. That is, an entrance to the operation of pressing the key to enter the wiping mode or to restore the mobile phone to the default settings is canceled, and the entrance is replaced with another entrance to the secret image-capturing and loss-reporting state. Alternatively, unlocking information (biometrically unique data or combined unlocking information is recommended) is added to the entrance to the engineering wiping mode of the mobile phone and to restore to the default settings. When input unlocking information does not match pre-stored unlocking information, the mobile phone sends the loss reporting information to the cloud account. In addition, the unlocking information can be set synchronously with screen unlocking information. The mobile phone can be wiped legally only through a wiping menu or by accessing the cloud account, after the screen is unlocked.

The present technical solution is equivalent to or is less preferred than another technical solution, in which image capturing and loss reporting is performed as soon as the mobile phone is wiped, or face scanning, image capturing and loss reporting is performed when the user is attempting to wipe the mobile phone.

In the present implementation, it is to be considered to cancel an operation that the screen is unlocked only by inputting an alphabetic-numeric password when the mobile phone is switched on and a password input window pops up irregularly. Cancelation of the operation prevents the owner from wiping the mobile phone in a case that the owner forgets the alphabetic-numeric password. A solution to above technical problem is that the biometrically unique data and the alphabetic-numeric password have a same priority level. When the owner forgets the alphabetic-numeric password, the owner uses the biometrically unique data or combination thereof to unlock the screen. Alternatively, the alphabetic-numeric password is canceled for unlocking the screen, and only the biometrically unique data is used for unlocking the screen. Alternatively, a function in which the biometrically unique data is used to view or modify the alphabetic-numeric password (it is better to view or modify the alphabetic-numeric password only after performing decryption based on combination of various unlocking information) is to be developed.

The technical solution for unlocking the screen in case the alphabetic-numeric password being forgotten is relatively simple. That is, when the owner of the mobile phone forgets the alphabetic-numeric password for unlocking the screen, the owner performs fingerprint recognition, or face scanning, or combination of the fingerprint recognition and the face scanning, or other biometrically unique data to perform operations on an alphabetic-numeric password-changing option (The option can be displayed on a page in which the alphabetic-numeric password is input, or displayed after a wrong alphabetic-numeric password is input or the wrong alphabetic-numeric password is input for N times), such that the mobile phone enters a mode of modifying the alphabetic-numeric password for unlocking the screen. The owner inputs the biometrically unique data. After the phone determines that the biometrically unique data matches with the pre-stored biometrically unique data, the owner is allowed to view the alphabetic-numeric password or is guided to input a new alphabetic-numeric password to be stored in the mobile phone, and the previously stored alphabetic-numeric password is automatically deleted. The above function is also applicable to the mobile phone in the market, benefits of which are self-evident. That is, the problem that the owner forgets the alphabetic-numeric password is solved, and the owner does not need to reset the password after wiping a large amount of data from the mobile phone.

Based on the above, a security microkernel of the mobile phone, which stores the biometrically unique data, the alphabetic-numeric password, and the loss reporting number, is isolated from a storage computing unit of other application data (or two separated security chips are configured). In the above technical solution, wiping the mobile phone by pressing the physical key is further optimized. In the optimized technical solution, before entering the wiping mode, decryption needs to be performed based on the biometrically unique data. Subsequently, the alphabetic-numeric password is viewed or modified, or the mobile phone is restored to the default settings or is wiped.

In addition, when a computer is wiping the mobile phone, cracking the system of the mobile phone, and repairing the system of the mobile phone, the mobile phone may not access any network due to the user card being withdrawn out of mobile phone. Therefore, a technical design, which allows the captured image and the loss of the mobile phone to be reported through a network connected to the computer, can be developed.

Since the illegal user may disassemble a mobile phone, which cannot be wiped or a screen thereof cannot be unlocked, to use components of the mobile phone to obtain illegal benefits, the present disclosure provides a method of reporting loss of the mobile phone that prevents the mobile phone from being disassembled, and therefore, attempts to disassemble the mobile phone to obtain illegal benefits are stopped. The present method is applied to the mobile phone, which has registered the cloud account and logged in the mobile terminal account (mobile phone location being enabled by default) and/or bound to the loss reporting number. A photosensitive sensor is fixedly arranged under the screen or on a device body inside an outer case of the mobile phone, and a photosensitive power-on program is set in the mobile phone. When the screen or a rear cover of the mobile phone is detached, the device body of the mobile phone is photosensitively switched on, the camera is switched on, and images or videos and location information of the mobile phone are sent to the cloud account and/or to the loss reporting number.

The camera includes a front camera, a rear camera, and an interior camera.

To be noted that the above method of reporting loss of the mobile phone when the mobile phone is being disassembled is preferably performed cooperatively with the method of secretly reporting loss of the mobile phone when the battery power is less than the threshold.

In addition, a menu for legal disassembling of the mobile phone is set in the private interface after the screen is unlocked based on the unlocking information. When the menu is clicked, the photosensitive sensor is cut off and stops operating. However, it is preferable not to set the menu. That is, regardless of whether the mobile phone is disassembled legally or illegally, the mobile phone always performs, when being disassembled, loss reporting. However, the menu for legal disassembling needs to be set for a mobile phone, which is self-destructed when being disassembled.

The above-mentioned photosensitive sensor can be replaced by a gas sensor, a pressure sensor, a magnetic sensor, and so on, which will not be described in further detail.

The technical solution in which the sensor is configured for preventing the mobile phone from being illegally disassembled, and a technical solution in which an electric lock is configured for preventing the mobile phone from being illegally disassembled, each has advantages and disadvantages. For the technical solution in which the sensor is configured for preventing the mobile phone from being illegally disassembled, the sensor occupies a small space. However, when the battery power is completely consumed out, the sensor does not operate at all. For the technical solution in which an electric lock is configured for preventing the mobile phone from being illegally disassembled, the electric lock occupies a large space. However, even when the battery power is completely consumed out, the outer case of the mobile phone is still locked. In this case, although the loss of the mobile phone is not reported, the illegal disassembling of the mobile phone is prevented, and the mobile phone is seriously damaged when being forced to be disassembled.

A technical principle of using the electric lock to prevent the illegal disassembling is as follows. The electric lock is fixedly arranged inside the mobile phone and is connected to a power-on key. The power-on key is only configured for switching on or secretly switching on the mobile phone, but is not configured for switching off the mobile phone. The electric lock is controlled by an encryption menu. The locked case of the mobile phone can be disassembled when the menu is activated.

During a time period when the menu is not activated, the outer case of the mobile phone case is locked. When an external force is applied to disassemble the mobile phone, and when the mobile phone is switched off, the case compresses the power-on key to switch on the mobile phone, and the mobile phone captures an image and sends the loss reporting information to the cloud account and/or to the loss reporting number. When an external force is applied to disassemble the mobile phone, and when the mobile phone is in the standby state, the mobile phone captures an image and sends the loss reporting information to the cloud account and/or to the loss reporting number. After loss of the mobile phone is reported, a warning of stopping the illegal disassembling of the mobile phone is issued. After the warning is issued, if the mobile phone continues to be disassembled by the external force, the mobile phone is locked up and turns into a brick; or starts a self-destruction program; or turns into the brick and starts the self-destruction program. Even when the mobile phone is not self-destructed, important components that are closely connected to the case of the mobile phone are seriously damaged by the external force.

In order to achieve better anti-disassembling effect, the loss reporting for preventing the mobile phone from being illegally disassembled can be performed cooperatively with a plurality of equivalent technical solutions. However, as technologies develop, the mobile phone in the future may be developed to be solid that the mobile phone cannot be disassembled by manpower unless the screen is unlocked. When a powerful tool is used to disassemble the mobile phone, the mobile phone may be destructed, such that important components cannot be used for a second time. Before the mobile phone is destructed, many information clues are left behind. Even more intelligently, the cloud account also receives the captured image and the location and time of the mobile phone before the mobile phone is picked up and maliciously fallen and crushed.

The technical principle of the present technical solution can be summarized or abbreviated to be anti-theft and loss reporting of the mobile phone when being illegally disassembled. The application of the electric lock to prevent illegal disassembling and the application of the sensor to prevent illegal disassembling are equivalently protected by the present disclosure.

Since anti-theft technologies of the mobile phone in the art have various defects, not many people return back a mobile phone that is picked up, and situations of thieves stealing mobile phones still exist. Moreover, a first choice of a thief who steals the mobile phones is to press the power key to switch off the mobile phone (which is equivalent to switching off the mobile phone by voice or by combination of various physical keys). Therefore, the present disclosure provides a method of loss reporting based on a switching-off maze (to increase a chance of capturing a human face). For the loss reporting based on the switching-off maze, the mobile phone is switched off through an encrypted menu. Any attempted switching-off operation that does not enter the encrypted menu is a deceiving false switching-off or a delayed switching-off. The mobile phone sends the loss reporting information when the false switching-off or the delayed switching-off is performed.

After the mobile phone is falsely switched off and performs the loss reporting, the mobile phone enters a secretly lost state and waits to be remotely manipulated. After the mobile phone is delayinly switched off and performs the loss reporting, the mobile phone waits to be switched on at a set time point to secretly performs the loss reporting or secretly performs the loss reporting when being charged. Subsequently, the mobile phone is remotely manipulated. Of course, in practice, the mobile phone is not switched off based on the maze but is switched off based on the password, but the illegal user does not know the correct password. In this case, the mobile phone is still illegally used, and therefore, the mobile phone enters the secretly lost state, sends the loss reporting information, and is manipulated. That is, when the wrong password is input or the password is not input within the certain period of time, the mobile phone enters a secret standby state and is manipulated.

The loss reporting based on the switching-off maze can be implemented as various technical solutions, such as loss reporting based on the switching-off maze after pressing the power key, or loss reporting based on the switching-off maze in the public interface.

According to the loss reporting based on the switching-off maze of the present disclosure, the encrypted menu refers to a setting or an application function subordinating to a locked screen interface or an encrypted switching-off menu in the public interface.

The present technical solution can be summarized or abbreviated to be loss reporting based on delayed switching-off and the maze. That is, the mobile phone, which has registered the cloud account and logged in the mobile terminal account (the mobile phone location being enabled by default) and/or bound to the loss reporting number, is switched off through the encrypted menu. Any attempted switching-off operation that is performed by pressing the power key is determined as the deceiving false switching-off or the delayed switching-off. The mobile phone sends the loss reporting information and/or enters the secretly lost state when the false switching-off or the delayed switching-off is performed.

The encrypted menu is a shutdown menu in a password-locked phone or a password shutdown menu in the public interface.

Further, after the mobile phone is secretly switched on when being charged, the mobile phone sends the loss reporting information.

Alternatively, furthermore, after the mobile phone is secretly switched on, the mobile phone is switched off or delayingly and secretly switched off when receiving a manipulation command.

For the mobile phone, which has registered the cloud account, logged in to the mobile terminal account (the mobile phone location being enabled by default), and/or bound to the loss reporting number, and recorded face data to unlock the screen, the technical solution of pressing the power key to attempt switching off the mobile phone and to report loss of the mobile phone is relatively simple. The power key is long-pressed, and the mobile phone preferably enters the secret face scanning state (no voice or image is displayed, and therefore, the user is unaware of the face scanning). In the case that the scanned image data is consistent with the pre-stored face data, the mobile phone enters the in-use state (alternatively, the screen is unlocked by the alphabetic-numeric password and the fingerprint recognition), and a switching-off menu is selected to switch off the mobile phone; alternatively, a switching-off menu in the public interface is selected, a switching-off password is input to the switching-off menu in the public interface to switch off the mobile phone. When the scanned image data does not match with the pre-stored face data or the face scanning is not completed within the certain period of time, the mobile phone secretly captures the image and sends the image, the address, and other information to the cloud account or to the loss reporting number; and the mobile phone enters the public interface or enters other states. Further, the power key is long-pressed, the mobile phone enters a re-starting prompt state. If the mobile phone is frozen when being in the in-use state, the power key is long-pressed, and the mobile phone enters the re-starting prompt state.

For the mobile phone that has stored the face data for unlocking the screen, in the technical solution of pressing the power key to attempt switching off the mobile phone and to report the loss of the mobile phone, a switching-off option may not be triggered when the power key is pressed. In order to switch off the mobile phone, the screen needs to be unlocked, and the switching-off menu is selected; or the switching-off menu is selected, and decryption is performed. Similarly, for any mobile phone having the switching-off menu in the screen, the switching-off option triggered by the physical key is omitted, and only a re-starting menu, which is triggered when the physical key is pressed, is retained.

In comparison, the present technical solution has a smaller probability of false image capturing and loss reporting. The present technical solution is relatively naturally performed and can easily obtain information of the illegal user, such as the face of the illegal user.

In order to better achieve the concept of secretly reporting loss of the mobile phone, the present disclosure further provides a new technical solution related to an intelligent mobile terminal. The present technical solution may be referred to as: a hierarchical management for mobile phone interfaces and function icon menus. For the inventiveness of the present technical solution, the mobile phone interfaces and the function icon menus are classified into a public interface (public page) class and a private and encrypted interface (private page) class. The private and encrypted interface class is further classified into a second fingerprint or vein encryption portion of a secondary private sub-interface and a third fingerprint or vein encryption portion of a tertiary private sub-interface, which are similar to an application splitter. The second fingerprint or vein encryption portion corresponds to a secondary password, and the third fingerprint or vein encryption portion corresponds to a tertiary password (privacy and security functions of the mobile phone are encrypted in a plurality of levels). The essence of the present technical solution is that a non-private and non-secure page and a non-private and non-secure menu of the mobile phone are not locked, and the mobile phone adopting the above application may be referred to as: a screen locking mobile phone that isolates public from privacy.

In addition, call information in a call menu in the first screen or in the public interface of the mobile phone includes only codes or designator information and emergency contact numbers, such as 110, 120, and so on. For example, other contact numbers in the mobile phone and contact numbers of friends and relatives of the owner of the mobile phone are only displayed as: an emergency contact A, an emergency contact B, an emergency contact C, and so on. The codes or the designator is used to replace a real contact number, a real name or a real title corresponding to the contact number.

In order to obtain more information about the illegal user, the public interface includes a WIFI setup menu that is configured to search for a hotspot (with the relaxation of access to the network for the mobile phone having the virtual user card, the public interface may further include a code writing setup menu in which only writing or downloading or transferring to a new number is allowed). In this way, the mobile phone can be used more often by the illegal user, and therefore, more information of the illegal user, especially a contact number of the illegal user, can be obtained.

In addition to a social menu, a shopping menu, and a payment application menu, the private interface further includes a security function setting menu. That is, any function that is controlled by the power key or any function that the power key is involved in controlling is set to subordinate to the private and the locked screen interface, where the function includes: switching off the mobile phone, wiping the mobile phone, restoring the mobile phone to default settings, PIN code locking and password changing, a flight mode, a Bluetooth switch, disconnection and connection to the network, and so on. When the mobile phone is frozen, the mobile phone is re-started by pressing the power key, or the mobile phone is manipulated through the cloud account.

The above application allows the user to use the mobile phone more conveniently. When the power key is slightly pressed, the public interface of the mobile phone is open. Alternatively, when the power key is pressed, the screen is lit up, and subsequently, the mobile phone enters the public interface or scans the face to enter the public interface. Further, a sliding operation is performed on the screen to enter an interface in which the unlocking information is to be input to unlock the screen. Further, the correct password is input to unlock the screen, or the finger of the owner touches the fingerprint sensor to open the private interface of the mobile phone. When the private interface is open based on the fingerprint recognition firstly and sliding operation is performed on the screen subsequently, the interface in which the unlocking information is to be input to unlock the screen is not displayed.

In addition to the calendar, the music, the alarm clock, the distance measurement, the translator, the wallpaper, the calculator, the compass, the pedometer, the scanning, the e-book, the web searching, the weather forecast, the WIFI (limited to hotspot searching and settings), the time, the battery power, the signal, and other public menus; other applications or functions can further be developed for the public interface of the mobile phone. The further developed applications or functions include: attractive games, other inducing menus, or downloadable stories, pictures, videos or movies. If the game is being run and the video or the movie is being played when the mobile phone is reported as being lost, the mobile phone secretly sends the location and image information to the cloud account. In addition, an interface is popped up above the induced menu, the game, the video or the movie, and the popped up interface instructs reconnection to the internet due to disconnection, or instructs the user to input a contact number for verification, or instructs insertion of a new user card due to the original user card being invalid, or induces the user to sign up for a cloud account. After the illegal user input any data, the input data is sent to the cloud account, or information of the illegal user or friends or relatives of the illegal user can be obtained, such as information about internet connection (such as a Wi-Fi name, a password, and so on), contact numbers thereof, or account information thereof.

In the public interface, an application having private data is allowed to be downloaded and logged in. However, once the application is successfully logged in, the screen is automatically locked, and the application is transferred to the private interface. Therefore, combining with the concept in which the mobile phone enters different states (modes) or different operation states when recognizing different passwords and/or different identification data and different time points at which the password is input, the public interface of the present technical solution is further classified into two function menus that are not exactly the same as each other. As long as input unlocking information (a password and/or face data) matches with the pre-stored unlocking information (a password and/or face data), the mobile phone is determined as being used legally, and all displayed public interface are publicizable menus. When the input unlocking information does not match with the pre-stored unlocking information or the unlocking information is not input within certain period of time, the mobile phone is determined as being used illegally, and displayed public interfaces include: the publicizable menus and inducing menus, such as an application store and/or a part of application menus that is to be logged in but has no content.

Further, a plurality of inducing menus may be grouped into one page or one interface to serve as a page that induces the illegal user to expose information. The page may be displayed after the input unlocking information (a password and/or face data) is different from pre-stored unlocking information or the unlocking information is not input within the certain period of time. Furthermore, suggestions of the voice assistant in the Harmony operating system are referred, AI-based smart inducing is performed when the mobile phone is being illegally used, and further intelligent optimization is performed. For the present concept and technical solution, more information about the illegal user is obtained, and mis-operations performed by the legal user are minimized. Therefore, simulation or tests are to be performed to determine a better implementation from a plurality of equivalent implementations. The purpose of the present technical solution is that the owner of the mobile phone is facilitated to use the mobile phone; information of the illegal user is obtained as much as possible when the mobile phone is lost; and the person who finds the mobile phone and is willing to give it back the owner can contact the friends and relatives of the owner or call other contact numbers of the owner.

To be noted that the mobile phone, which classifies the function icon menus into the public interface and the private interface, directly enters the first screen or the public interface without requiring the numeric password to be input to unlock the screen. Similarly, a screen-locked mobile phone having the loss reporting function is recommended to cancel the operation in which a password is verified to unlock the screen after the mobile phone is re-started or is switched off and switched on again. Alternatively, even when the operation of verifying the password is performed, the mobile phone still enters the first screen and/or the public interface.

A text message menu icon may also be displayed on the first screen and the public interface, but applications of the text message menu icon need to be further refined. The aim of the present disclosure is to induce the illegal user to expose more information without revealing the privacy of the owner. For example, a text message can be edited and sent through the public interface, however, the text message is not sent for real, and an input contact number and content of the text message is secretly sent to the cloud account and/or to the loss reporting number. In another example, the mobile phone receives a text message sent from an emergency contact number through the first screen or the public interface, however, a text message having a verification code cannot be received.

In addition to a public and usable menu in the public interface, a fun page, such as a funhouse mirror, is directly displayed in the wallpaper or in a negative-one screen of the mobile phone to attract the illegal user to reveal more face information.

Differences between the related art and the present technical solution in which the public is isolated from the privacy include the following. In the art, when the screen is locked, all applications and all menus of the mobile phone are locked. However, the technical solution in the art cannot be performed flexibly, personal information of the illegal user is obtained easily, and it is difficult to recover the stolen mobile phone without obtaining sufficient information of the illegal user. The person who picks up the mobile phone and is willing to give the mobile phone back to the owner cannot contact the owner conveniently. For the mobile phone in the present technical solution, the person who picks up the mobile phone and is willing to give the mobile phone back to the owner clicks, on the first screen or the public interface, to dial a contact which is shown in the menu as an emergency contact (a contact number of the contact is not shown). In this way, the owner can be reached in time and conveniently.

Even when the above technical solution in which the public is isolated from the privacy is implemented on its own without being combined with the method of reporting the loss of the mobile phone, consumers may still have a more enjoyable and secure usage experience.

Another benefit of the above implementation is that a probability of reporting the loss of the mobile phone is increased greatly. The legal owner has more opportunities to obtain information about the illegal user and has more opportunities to communicate with the illegal user, and therefore, the legal owner can further manipulate the lost mobile phone.

The present technical solution can be summarized and abbreviated as: classifying the mobile phone interfaces into the public interface and the private interface. The public interface is publicized to allow the illegal user to use the mobile phone as much as possible and to allow the illegal user to expose, when using the stolen mobile phone, the contact number thereof as much as possible. The contact number of the illegal user is the most important information that is to be obtained. Technologies of automatic loss reporting due to illegal card replacement from a non-smart phone has been widely implemented since the stolen mobile phone can still be used to obtain the contact number of the illegal user easily. Therefore, the mobile phone having the locked screen needs to be usable to increase the probability of obtaining the contact number of the illegal user.

Based on the above technical concept in which the illegal user is allowed to use the stolen mobile phone as much as possible to expose various information of the illegal user, the implementation of the public interface being isolated from the private interface can be extended to any equivalent change to mobile phone interfaces and screen locking technologies in the art. For example, a call menu of codes of the emergency contact number, a WIFI setting menu, and other menus for inducing the illegal usage are added to a page of an unlocked screen of the mobile phone. Some suspending menus to induce the illegal usage, customized and public widgets, and information cards are added to the wallpaper of the mobile phone. A scrolling engine for hot news and a sliding border menu to induce the illegal user are added on the first screen of the mobile phone. Mobile phone interfaces for allowing the illegal user to expose more information have various equivalent variations, which can be understood in the context of the present disclosure and other content of related disclosures.

From a general point of view, the above implementation is to split the screen display of the mobile phone into two major parts according to certain rules. One of the two parts is a first level page of the mobile phone, which does not contain any private content, is irrelevant to security, and does not require the screen to be locked. The other of the two parts is another first level page of the mobile phone, which involves the privacy and the security and requires the screen to be locked. The public interface of the present technical solution and most technical solutions in the present disclosure and related disclosures belongs to and is equivalent to the first level page of the mobile phone which does not require the screen to be locked.

A preferred novel implementation is pressing the power key to enable the first screen, which has the codes of the emergency contact number, to be displayed. The first screen of the mobile phone includes an icon menu of an emergency loss reporting contact and/or related prompts. The icon menu includes the codes of the emergency loss reporting contact (preferably a watch or a glasses phone or a second mobile phone of the owner of the lost mobile phone) without displaying a real contact number. The codes are used to replace the real contact number, the name, and the title of the emergency loss reporting contact. When the codes are clicked, the emergency loss reporting contact is called. The icon menu and/or the related prompts may alternatively be displayed on the public interface.

The first screen of the mobile phone including the icon menu of a contact or the emergency contact is a technical solution that can be implemented independently. Preferably, the icon menu includes the codes of the emergency loss reporting contact without displaying the real contact number thereof. A less preferred technical solution in which the real contact number or other contact information is directly displayed also belongs to the scope of the present disclosure.

The first screen is displayed after the power key is pressed or after the mobile phone is shaken. In a first screen displaying state, when the mobile phone scans the face or the face scanning is not performed within the certain period of time (or the screen is scrolled by the user), the mobile phone enters the public interface. When the password input for unlocking the screen is correct, or when the finger touches the fingerprint sensor and fingerprint recognition is successful, the private interface of the mobile phone is open. Alternatively, when the scanned face data matches with the pre-stored face data, the mobile phone enters a secondary private interface or menu.

Of course, it is complicated to implement the hierarchical management for the mobile phone interfaces to enable the person, who picks up the phone and is willing to give it back to the owner, to conveniently contact the owner in a shortest possible time. A dialing interface of the mobile phone in the art can be slightly improved to achieve the above purpose. The slightly improved technical solution provided by the present disclosure is a sub-interface (emergency contact number) subordinating to a password login interface of the mobile phone. In the present technical solution, after an emergency menu or a menu having another name on the password login interface of the mobile phone is clicked, the sub-interface is accessed. The sub-interface has options for dialing and/or sending a message to the emergency contact A, the emergency contact B, the emergency contact C, and so on, without displaying any contact number thereof.

According to the above implementation, furthermore, after the user inputs and dials a contact number (named as a non-emergency number), in case that the mobile phone is not correctly unlocked, the mobile phone cannot successfully dial the input contact number and cannot send the message to the input contact number. Further, the mobile phone secretly sends the input contact number or the dialed contact number to the cloud account and/or to the loss reporting number. The above technical solution can be combined with the technical solution in which the mobile phone enters different states or different operation states in response to recognizing different passwords and/or different recognition data and different time points at which the password is input, and the combined technical solution can be further refined. In the instant implication, when the illegal user is trying to obtain the contact number of the owner of the mobile phone, the owner is enabled to obtain the contact number of the illegal user or numbers of mobile phones surrounding the illegal user, and at the same time, contact numbers of the owner, the friends, and the relatives of the owner of the mobile phone are not exposed. The instant implementation is also a method of inducing the illegal user to expose the personal important information. The present technical solution may be equivalent to a less preferable technical solution in which the illegal user can dial the non-emergency number and send the text message to the non-emergency contact number through the lost or stolen mobile phone, but the number of the lost or stolen mobile phone is exposed, and telecommunication fees are consumed from the stolen mobile phone. Similarly, the present disclosure and other technical solutions of related disclosures may be less preferable as long as information or other purposes of the illegal user are obtained without revealing important information about the owner of the mobile phone, such as appearance, financial assets, and so on. For example, a stolen mobile phone, after reporting the loss to the cloud account, may dial the non-emergency contact number, send the text message to the non-emergency contact number, and display other contact numbers of the owner on the first screen or in the public menu.

According to the above implementation, furthermore, the mobile phone secretly captures the image and sends the image, the location and other information to the cloud account and/or to the loss reporting number.

According to the above implementation, the sub-interface may further include other menu options which do not expose any privacy.

In addition, the sub-interface having the emergency contact number may create an emergency contact menu in the public interface.

Furthermore, if it is only to facilitate the person, who picks up the mobile phone and is willing to give it back the owner, to contact the owner, the icon menu, which displays the codes of the emergency contact, is added to the first screen; the public interface and the private interface are not isolated from each other, and the secret loss reporting is not performed. The present technical solution is a method for the person, who picks up the mobile phone and is willing to give it back the owner, to contact the owner (or relatives or friends of the owner) proactively and in time. Of course, other equivalent methods are available. For example, a WeChat QR code of the owner of the mobile phone or a WeChat QR code of a friend of the owner is displayed on the first screen or the public interface; or the QQ of the owner can be directly called by voice.

The purpose of the present technical solution is that, after the mobile phone is lost, the person, who notices the mobile phone, is enabled to contact the owner or friends and relatives of the owner in the first time, and at the same time, the privacy of the owner or the friends and relatives of the owner is not exposed and cannot be maliciously used by any illegal user. For the lost mode in the art, the contact number of the stolen mobile phone is displayed on the stolen mobile phone. In this case, the mobile phone is not recovered, and furthermore, the owner is suffered from harassment from the illegal user or is cheated by the illegal user.

When the mobile phone has a limited number of function menus, the first screen of the mobile phone can be merged with the public interface. In this case, the numeric password and/or the biometrical data are used to unlock the private interface only. However, as the mobile phone has an increased number of functions, a fully-intelligent loss reporting and secure mobile phone is preferred, and interfaces thereof include: the first screen, the public interface, and the private interface.

When a mobile phone, which has registered the cloud account, logged in the mobile terminal account (mobile phone location being enabled by default), and/or bound to the loss reporting number, and recorded face recognition data, is in the standby state, the mobile phone displays the first screen and secretly scans the face when the power key is pressed.

When the scanned image data matches with the pre-stored face data, the mobile phone displays the public interface.

When the scanned image data does not match with the pre-stored face data or the face scanning is not performed within the certain period of time, the mobile phone secretly captures the image and sends the image, the address, and other information to the cloud account or to the loss reporting number, and the mobile phone displays the public interface.

The screen of the mobile phone is scrolled to enter a password inputting page. The correct password or the correct fingerprint are input to unlock the screen, and the mobile phone displays the private interface.

When the input fingerprint data or the input numeric password does not match with the pre-stored fingerprint data or the pre-stored numeric password, or when the fingerprint data or the numeric password is not input within the certain period of time, the screen of the mobile phone still displays the password inputting page or returns to the public interface or displays the induction (menu) page, and at the same time or subsequently, the mobile phone secretly captures the image and sends the image and the location of the mobile phone to the cloud account.

The induction page is a page to guide the illegal user to expose the personal information thereof (preferably the contact number, a card number and a financial account). The induction page includes: an application, which can be downloaded and requires verification, registration, or inputting a password to log in; and/or a prompt, which reminds the illegal user to replace the user card or induces the illegal user to illegally replace the user card.

Further, after the mobile phone displays the private interface, or after a menu or an important menu of a target application (Alipay or WeChat) in the private interface is clicked, the mobile phone scans the face to generate a face image.

If the scanned image data matches the pre-stored face data, the clicked menu opens or the mobile phone displays an interface that is displayed just before the screen of the mobile phone is off.

If the scanned image data does not match the pre-stored face data, the mobile phone stays at the private interface or induces the illegal user to input a mobile phone number for verification, or further secretly captures the image and sends the image, the location of the mobile phone, and the input mobile phone number to the cloud account.

In the above implementation method, the face recognition is performed after the power key is pressed, and in this way, it is determined whether the mobile phone is used legally or illegally, and it is determined whether the mobile phone needs to perform image capturing and loss reporting. Performing the face recognition after pressing the power key substantially aims to unlock the mobile phone for a second time or to unlock the mobile phone and to report the loss of the mobile phone.

According to the above implementation, in the case that the mobile phone displays the private interface; or in the case that the important menu of the target application is clicked when the private interface is being displayed, the mobile phone requires the user to input a second fingerprint data. When the second fingerprint data matches with the pre-stored fingerprint data, the clicked menu is open. When the second fingerprint data does not match with the pre-stored fingerprint data, the mobile phone stays at the private interface; or guides the user to input the mobile phone number for verification, secretly captures the image, and sends the image, the location of the mobile phone, and the input mobile phone number to the cloud account (or the mobile phone returns to the first screen or the public interface).

The present technical solution also lets the illegal user off in order to catch the illegal user and lures the illegal user. Common applications and functions of the mobile phone are taken into account, and the mobile phone secretly performs the loss reporting. In addition, the important and private interface is secondarily encrypted and is protected in multiple levels (which is equivalent to setting two doors and multiple locks, including series locks). In this way, the mobile phone is more secure. Even when the unlocking password leaks, the owner of the mobile phone may not have a huge loss. The present technical solution is recommended to be performed cooperatively with the method of loss reporting based on the switching-off maze.

For the mobile phone having the first screen, the public interface, and the private interface, when "two doors" (as explained in the above) are configured for the private interface, a face-recognition lock is configured for the first "door", and a fingerprint-recognition lock is configured for the second "door" (or two locks are configured for a same door in a non-series and side-by-side manner). In this way, it saves power and time to perform the above technical solution of luring the illegal user, and the owner uses the mobile phone more smoothly. The present technical solution is performed by performing following operations.

The power key is pressed to allow the mobile phone to display the first screen and to secretly scan the face of the user.

When the scanned image data matches with the pre-stored face data, the mobile phone displays the public interface and unlocks the first lock of the private interface. Subsequently, when the input fingerprint data matches with the pre-stored fingerprint data, the second lock of the private interface is also opened.

When the scanned image data does not match the pre-stored face data or the face scanning is not performed within the certain period of time, the mobile phone secretly captures the image, sends the image and the address to the cloud account or the loss reporting number, and displays the public interface. However, even when the fingerprint data, which matches with the pre-stored fingerprint data, is input subsequently, the private interface still cannot be opened.

The above two types of technical solutions to lure the illegal user are equivalent to each other. With further expansion, more equivalent technical solutions can be obtained and will not be listed one by one.

When reporting the loss of the mobile phone is not considered, the secret loss reporting is omitted from the above technical solution to obtain another technical solution, which is still a convenient, natural, undetectable, and fast technical solution to provide double-encryption protection for important functions of the mobile phone. Of course, not only for the important functions, all icon menus can be protected by the double encryption, which includes: the face recognition and the fingerprint recognition; or the numeric password verification and the face recognition. That is, the double encryption and double screen unlocking are configured.

To be explained that, in the art, the numeric password verification, the face recognition, and the fingerprint recognition are in-series locks, i.e., any one input unlocking information matches with the pre-stored unlocking information, the screen is unlocked. By contrast, in the present disclosure, the above locks are side-by-side locks or multi-door locks, the screen is unlocked (the mobile phone is determined as being legally used) only when the input unlocking information of each of the locks matches with the corresponding pre-stored unlocking information.

The double encryption described above is different from the double authentication of the Apple cloud account, which mainly considers the problem of theft of alphanumeric passwords but ignores some problems that occur when the mobile phone is stolen without prior authentication.

It should also be noted that the current payment applications try to minimize the use of face recognition alone, whereas the present disclosure suggests that face recognition focuses on identifying whether the mobile phone is reported lost, while fingerprints focus on unlocking the mobile phone. Regarding the multiple encryptions for payment applications, it is recommended to use multiple different fingerprints, or to use fingerprint-and-face parallel multiple encryptions or fingerprint-and-face step-by-step multiple encryptions. If the finger vein recognition technology overcomes the structural factors to be popularly applied on mobile phones, screen unlocking and payment will be more secure for the mobile phone.

Intelligence of the mobile phone ensures the security of the mobile phone and warns the owner of the mobile phone about the security. Therefore, the present disclosure provides a security warning mobile phone, which is configured with a security warning key, a security warning menu, and a corresponding security warning program. An implementation method of the security warning program is as follows. The security warning key of the mobile phone, which has registered the cloud account, logged in the mobile terminal account, and/or bound the loss reporting number, is continuously pressed for a plurality of times. The mobile phone enters different security warning states or different emergency police-reporting states based on the number of times that the security warning key is pressed. Alternatively, the security warning menu of the mobile phone is clicked, and the mobile phone enters an interface-displaying warning state in which a suspended menu is displayed. In the security warning state, when the security warning key is pressed or continuously pressed for a plurality of times, or when the suspended menu is clicked, or when a sensor of the mobile phone senses a corresponding signal, the mobile phone enters different emergency police-reporting states based on: the number of pressing times; or operations performed on the suspended menu; or the sensed signal.

In the security warning state, the mobile phone sends relevant warning information to the cloud account. In the emergency police-reporting state, the mobile phone sends relevant police-reporting information to the loss reporting number and/or the police number.

In addition, according to the security warning of the mobile phone in the present technical solution, when the mobile phone is stolen or lost, the mobile phone can still perform the loss reporting and is prevented from being stolen.

In the present technical solution, the security warning function is further configured for the mobile phone in addition to the emergency police-reporting function. In this way, a false police-reporting rate of the emergency police-reporting is reduced. When the present technical solution is widely applied, a crime rate can also be reduced, and security of citizens is ensured.

A mobile phone, which has the above anti-criminal function, is commonly referred to as an anti-criminal mobile phone or a security warning mobile phone. In the warning state, other functions of the mobile phone are not affected, however, the mobile phone sends, relatively frequently and at certain intervals, the location and/or images, audio recordings, videos, and so on to the cloud account and/or to the emergency contact number. Further, when the battery power is less than a forced switching-off threshold, the mobile phone still does not switch off when the mobile phone is in the security warning state.

In addition, an intercom function may be developed on the security warning mobile phone. In the warning state, the mobile phone and the emergency contact phone simultaneously enter an intercom-waiting state. The emergency contact phone or a telephone needs to have the intercom function as well. Preferably, the intercom function is an intercom function uni-directionally to a whitelist of emergency contacts.

The intercom function uni-directionally to a whitelist of emergency contacts allows the lost mobile phone to call or to be called by the emergency contact phone, when the lost mobile phone accidentally receives no service from any operator, or when the physical user card is damaged, or when the physical user card is withdrawn out of the mobile phone. Emergency responses under some extreme situations need to be developed by the manufacturer cooperatively with the operator to increase a selling point of the mobile phone. In this way, incomes of the operator due to value-added services can be increased, and it is of great significance to the loss reporting and anti-theft of the mobile phone.

Intelligent recognition of the mobile phone may be further refined. More urgent police reporting and location-sharing information is performed based on intelligent voice intercom and voice print recognition, and a sharp alarming sound is played from the mobile phone.

For example, when the mobile phone intelligently recognizes a high decibel sound, or when a motion sensor detects a violent movement, the mobile phone automatically sends the police-reporting information and/or the location-sharing information to 120, 110, and so on, and plays the sharp alarming sound.

Intelligent recognition enables the mobile phone to perform police reporting and to play the sharp alarming sound; and/or enables the screen of the mobile phone to flash at high brightness; and enables the mobile phone to automatically capture images and perform recognition through infrared radiation at night scenes.

Furthermore, when the power key is pressed continuously and hurriedly for a plurality of times, the security warning mobile phone flashes at high brightness, and at the same time, calls the emergency contact number.

The operator activates a whitelist of emergency contacts and 5G messages or adds locating and location sharing functions in the 4G multi-media message function. In this way, location information of the mobile phone before and after contacting an emergency contact or reporting to the police is sent automatically, or the location sharing request is sent. When the operator does not support the locating and the location sharing function, the mobile phone needs to develop applets or applications to support the locating and the location sharing function.

The anti-criminal mobile phone is mainly developed for females or people doing night shifts and includes new applications for 5G messages.

Implementation of the security warning of the mobile phone can be further refined, and the aim thereof is to simulate a potential risk scenario and develop a corresponding program, which allows the mobile phone and the cloud account to record relevant clues, especially audio and visual evidence, and to urgently report to the police at dangerous situations.

Combining with the mobile phone being illegally used after being stolen or lost, for the fully-intelligent loss-reporting mobile phone that performs the security warning, the above-mentioned security warning key is the power key. When the mobile phone detects that the power key is pressed continuously and quickly for a plurality of times; or when a time length that the power key is long-pressed reaches a threshold time length, the mobile phone plays a high alarm tone and/or flashes at high brightness.

In this way, after the mobile phone is stolen, the operation that is performed by the thief to attempt to switch off the mobile phone is consistent with the operation that is performed by the legal owner when encountering an emergent and dangerous situation. Therefore, one technical solution achieves two technical effects, and the aim thereof is to protect assets of the legal owner.

For further optimization, the mobile phone provides warning and calls the police when being with the owner of the mobile phone, and also performs loss reporting and police reporting when being held by the illegal user. In the above two situations, a same program or a substantially the same program is invoked.

The present invention aims to enable parameters related to the security of the mobile phone to be set by performing simple operations. However, in order to perform the simple operations to set the parameters of important functions of the mobile phone, the owner of the mobile phone needs exhaustive explanations or instructions. Therefore, the present invention provides a mobile phone configured with function usage instructions. The mobile phone in the present invention includes an initial-switching-on guidance page, a mandatory function guidance program, an optionally-important function introduction, a function catalog page, a page of exhaustive introductions for important functions, a usage guidance program. The function guidance program and/or the page of exhaustive introductions for important functions include: texts, pictures, animations, videos, and related links. Further, voice inquiries and voice explanations are developed to explain various functions of the mobile phone.

When the mobile phone is initially switched on, the mandatory function of the present technical solution provides the least operations to mandatorily guide the user to quickly set, without any thinking, the most important and critical parameters. Afterwards, the user can use the mobile phone without worrying about the mobile phone being lost or stolen.

It should be noted that the mandatory function and the important function in the present technical solution can be interchangeable with each other if the present invention is to be avoided on purpose. For example, the screen unlocking password, locking of a user card PIN code, and password changing are mandatory functions when considering the security of the mobile phone. However, in case that the screen unlocking password, locking of the user card PIN code, and password changing are determined as important functions on purpose, the screen unlocking password, the locking of the user card PIN code, and password changing are not set when the mobile phone is initially switched on, but are set when the user is reminded and has used the mobile phone for a certain period of time. It is a less preferred technical solution and is still within the scope of the present disclosure.

The present technical solution focuses on: the security of the mobile phone, explanation of functions related to the secure mobile phone, and parameter setting. Importance of the security of the mobile phone and the secure mobile phone has not attracted enough attention. Therefore, the present technical solution that seems uncomplicated can be implemented from a relatively simple operation in which the user is reminded to set parameters. For example, when the mobile phone is switched on or is in use, the user is reminded to lock the user card PIN code and to change passwords. This relatively simple operation is also inspired based on the present technical solution. Further, the user is reminded to set important functions of the mobile phone. Similar to updates of software versions, the user is reminded regularly or irregularly, until the parameter setting is completed.

The present technical solution is expansion and extension of guidance of setting the functions after the mobile phone is switched on. The function usage instructions of the present technical solution enable the user to use the mobile phone more conveniently and to understand complex functions of the mobile phone more easily and thoroughly.

The aim of the present technical solution is to enable the user of the mobile phone to set up the important functions as simply as possible, and to provide more detailed and more understandable function usage instructions. According to the above aim, some important functions in the setting of the mobile phone are independently displayed as independent function menus. The function menus are determined, depending on whether the function menus are involved in privacy and security, to be placed in the public interface or in the private interface. In this way, the user operates the mobile phone more conveniently and re-classifies and/or re-encrypts the independent function menus.

Again, imagine fully: in the near future, if operators support the launch of mobile phones supporting only virtual eSIM user card once, a method of an eSIM-card-only mobile phone performing loss reporting is also essential in the present disclosure. The method includes the following operations. After the mobile phone is abnormally used or receives a loss-reporting instruction, a built-in processing program in the mobile phone automatically performs (secret) loss reporting and/or is manipulated by the cloud account through a communication network provided by the virtual user card.

According to the above implementation method, the eSIM-card-only mobile phone can automatically perform loss reporting due to abnormal usage only when the mobile phone is registered with the cloud account and/or set the loss reporting number. In the case that the mobile phone has stored face data of the owner, the mobile phone performing the loss reporting due to the abnormal usage includes automatic loss reporting based on the face recognition.

According to the above implementation method, the mobile phone being abnormally used includes: inputting incorrect unlocking information and illegally switching off the mobile phone. Inputting the incorrect unlocking information includes: inputting an incorrect numeric password or incorrect fingerprint data; scanned face data not matching with the pre-stored face data; and inputting or scanning the unlocking information being not performed within the certain period of time. In this case, the mobile phone captures an image and reports the loss of the mobile phone; or enters a new system interface which can be manipulated and allows limited functions to be used normally. The new interface does not include any information recorded on the locked screen.

According to the above implementation method, the mobile phone receiving the loss-reporting instruction includes: the mobile phone entering the lost state after the mobile phone account receiving the loss-reporting instruction sent by the cloud account. When the mobile phone detects that the mobile phone is being in use, the mobile phone automatically captures the image and sends the loss reporting information to the cloud account.

According to the above implementation method, allowing limited functions to be used normally excludes: the mobile phone receiving (verification code) text messages sent from a contact other than the emergency contact; or the mobile phone unable to receive (verification code) text messages.

According to the above implementation method, for illegally switching off the mobile phone, since an encrypted menu is used to switch off the mobile phone legally, any operation of attempting to switch off the mobile phone without entering the encrypted menu results in the mobile phone to be falsely switched off to deceive the user. When the mobile phone is falsely switched off, the mobile phone sends the loss reporting information.

According to the above implementation method, the secret loss reporting includes: secret loss reporting to the loss reporting number and secret loss reporting to the cloud account. However, in order to perform the secret loss reporting to the loss reporting number, the loss reporting number needs to be set up in advance to receive the loss reporting information. The loss reporting information includes: the image that is secretly captured and sent, the location information of the mobile phone, and an input contact number. The input contact number refers to a number, which is input by the illegal user when the mobile phone is not unlocked correctly and is different from any emergency contact number in the public interface. When the mobile phone is not unlocked correctly, the user cannot dial any contact number other than the emergency contact number in the public interface, and cannot send a message to any contact number other than the emergency contact number in the public interface. The input contact number is sent to the cloud account and/or the loss reporting number.

In addition to the above various secret loss reporting methods (excluding the loss reporting when the user card being withdrawn or replaced), other methods of the present invention will not to be listed herein one by one, such as important contact numbers on the first screen, the public interface and the private interface being separated from each other, the mobile phone warning, the function usage instructions, manipulation of the mobile phone. Most of the above other methods are also applied to the eSIM-card-only mobile phone.

According to the above implementation method, the mobile phone having the virtual user card further includes a mobile phone that has a plurality of virtual user cards but does not have any physical card tray. The mobile phone of the present technical solution can be written; or performs downloading from the air; or transfers a plurality of user card information via Bluetooth. The plurality of user card information correspond to a plurality of contact numbers. The user can select one contact number to register for the cloud account. After the mobile phone is lost or stolen, the owner of the mobile phone retains one of the plurality of virtual user cards (a contact number corresponding to the retained virtual user card is used as less as possible and is bound to applications as few as possible) to provide the communication network; and/or the mobile phone performs loss reporting and warning automatically via WIFI.

The built-in eSIM card is the best solution to enable the mobile phone to remain connection with the network after the thief withdraws the user card. Therefore, the present invention provides supplements to the previously-submitted technical solution in which loss reporting is performed after the user card is withdrawn from mobile phone. Preferably, the present disclosure provides illustration for a security mobile phone having the built-in eSIM card. The mobile phone is arranged with two built-in eSIM cards; has a card tray in which the physical user card is placed; and has an anti-theft and loss-reporting program.

According to the implementation method, the anti-theft and loss-reporting program includes: reporting the loss of the mobile phone to the loss reporting number and/or to the cloud account; fully-automatic dialing to report the loss; and being manipulated to report the loss, all of which are triggered when the mobile phone is illegally switched off, or when a user card is illegally replaced, or when the mobile phone is abnormally used. In addition, the anti-theft and loss-reporting program further includes: the mobile phone performing the loss reporting through the eSIM card after the physical user card being withdrawn out of the mobile phone, i.e., illegal card withdrawal.

According to the above implementation method, the security and anti-theft mobile phone having the built-in eSIM card is equivalent to: the mobile phone having the virtual user card; a mobile phone having a built-in iSIM card; a mobile phone having a built-in vSIM card; a mobile phone having a built-in IoT card; a mobile phone having a built-in virtual user card that can copy parameters from other user cards; and a mobile phone having a built-in triple-network card, and so on.

According to the above implementation method, the illegal card replacement refers to the mobile phone detecting that unique identification data set in the user card is inconsistent with pre-bound identification data. In this case, the mobile phone is used normally, however, the mobile phone cannot enter the locked screen interface and performs the secret loss reporting.

According to the above implementation method, after the user card is withdrawn out of the mobile phone, the mobile phone performs the loss reporting through the eSIM card. Since some operators in some countries currently do not support phone calls and message sending through the eSIM card, the loss reporting through the eSIM card refers to reporting the loss through the network of the eSIM card to the cloud account and/or to a WeChat account. In the case that the operator supports making phone calls and sending text messages through the eSIM card, the mobile phone secretly dials the loss reporting number.

According to the above implementation method, in the case that the operator does not support making phone calls and sending text messages through the eSIM card, the WeChat account is a WeChat account of a friend of the owner of the lost mobile phone and is set in advance for receiving the loss reporting information. Similarly, manufacturers of mobile phones and research may develop similar applications for performing the loss reporting.

According to the above implementation method, for the mobile phone being abnormally used, before the physical user card is withdrawn and when the mobile phone is not correctly unlocked, the user inputs a contact number that is different from any emergency contact number in the public interface. However, when the mobile phone is not correctly unlocked, the mobile phone cannot make phone calls to or send text messages to any contact number other than the emergency contact numbers in the public interface. In this case, the mobile phone sends the above input contact number to the cloud account and/or to the loss reporting number.

According to the above implementation method, the illegal card withdrawal refers to the physical user card being withdrawn when the mobile phone being illegally switched off. In this case, the mobile phone plays a prompt sound, pops up a corresponding reminder, sends the loss reporting information, and subsequently plays a high alarm tone.

Similarly, before the user card is withdrawn out of the mobile phone and when the mobile phone is not currently unlocked, the mobile phone can make phone calls, however, phone calls cannot be made to or messages cannot be sent to the contact number other than the emergency contact numbers in the public interface. Instead, the mobile phone sends the contact number, which is input but is different from the emergency contact numbers in the public interface, to the cloud account and/or to the loss reporting number (hierarchical management of mobile phone interfaces for different states).

The above loss reporting technical solutions for the eSIM card mobile phone can be extended to the physical user card, comprehensively speaking, provided is a loss reporting anti-theft mobile phone with built-in user card. The technical solutions can be summarized as follows, the user card is fixed in the mobile phone and matched with a corresponding loss reporting program. The realization steps of the loss reporting program include: the mobile phone registers a cloud account and logs in a mobile phone account, and/or sets a loss reporting number, after the mobile phone is activated and connected to Internet.

When the mobile phone detects an abnormal use, the mobile phone enters a corresponding secret loss reporting state according to different abnormal operations, the secret loss reporting state including at least one of: waiting for secret loss reporting, pseudo power off loss reporting, secret delayed power off loss reporting, loss reporting in response to illegal dismantling of the mobile phone, loss reporting in response to illegal brushing of the mobile phone, timed secret power on and loss reporting followed by secret standby to secret power off, charging and secret loss reporting followed by secret standby. In the secret standby state, the mobile phone accepts a remote-control operation from the cloud account and/or the other mobile phone receiving the loss reporting.

The user card fixed inside the mobile phone includes a virtual card and/or a physical user card; the physical user card being fixed inside the mobile phone may be specifically implemented by the user card being fixed before or after leaving the factory, and the mobile phone with the physical user card fixed after leaving the factory may be arranged with a one-way sliding tab that locks the opening of the card tray in place or other locking devices.

According to the above implementation methods, fixing the physical user card inside the mobile phone has advantages and disadvantages, where the advantage is that the mobile phone may be more secure, and the disadvantage is the increased cost of the mobile phone. However, before the operator does not release all the applications of the virtual user card in the mobile phone, it is a good solution for a separation-type dual-card mobile phone against card withdrawal while disconnecting the network. Of course, if mobile phone manufacturers and operators cooperate to create a win-win business model, it is possible that all the applications of the virtual user card in the mobile phone are unlimited. For example, the mobile phone manufacturers help the operators customize mobile phones supporting the virtual user card; or, the mobile phones supporting the virtual user card are considered as a virtual user card watch, requiring another mobile phone to bundle into the network to achieve "one phone number corresponding to multiple terminals", and innovative applications may be developed for the two paired mobile phones. Furthermore, this technical solution may be further applied to tablet PCs, laptops, AR glasses, and so on.

The above technical solutions may be summarized as an anti-theft mobile phone with built-in user card, which is characterized by the fact that the user card is fixed inside the mobile phone and matches a corresponding loss reporting program.

The user card fixed inside the mobile phone includes a virtual card and/or a physical user card, the physical user card is fixed inside the mobile phone and can be fixed before or after leaving the factory, and the mobile phone with the physical user card fixed after leaving the factory may be arranged with a one-way sliding tab that locks the opening of the card tray in place.

The realization steps of the loss reporting program of the mobile phone include the following.

The mobile phone registers a cloud account and logs in a mobile phone account (with the locating function enabled by default), and/or sets a loss reporting number, after the mobile phone is activated and connected to Internet.

When the mobile phone detects an abnormal use, the mobile phone enters a corresponding secret loss reporting state according to different abnormal operations, the secret loss reporting state including at least one of: waiting for secret loss reporting, pseudo power off loss reporting, secret delayed power off loss reporting, loss reporting in response to illegal dismantling of the mobile phone, loss reporting in response to illegal brushing of the mobile phone, timed secret power on and loss reporting followed by secret standby to secret power off, charging and secret loss reporting followed by secret standby. In the standby state or the secret standby state, the mobile phone accepts a remote-control operation from the cloud account and/or the other mobile phone receiving the loss reporting.

For preventing the user card from being withdrawn from the mobile phone or preventing the mobile phone from being disassembled, preferably, a technical solution in which a mobile phone protective cover (case) is arranged with an auxiliary photosensitive sensor, a pressure sensor (such as a pressure-sensitive key, which is easily touched when the protective cover is detached), a magnetism sensor, can be precisely defined by referring to relevant technical solutions of the present disclosure. When the protective cover is illegally detached without performing decryption or unlocking the screen of the mobile phone, the mobile phone is triggered to play a high alarm tone and perform the secret image capturing and loss reporting; alternatively, the mobile phone is triggered to be secretly switched on and to perform the secret image capturing and loss reporting, and sends the image of the person, who illegally withdraws the user card or disassembles the mobile phone, to the cloud account. Corresponding effects of the present invention can also be achieved. The photosensitive sensor is located as close as possible to the card tray. When the photosensitive sensor is arranged, a non-transparent protective cover and an implementation corresponding to the non-transparent protective cover are required; or a position of the protective cover corresponding to location of the photosensitive sensor is non-transparent. The present technical solution is equivalent to the technical solution in which the mobile phone has an anti-disassembling mechanism and a corresponding loss reporting program and is prevented from being disassembled, and the user card is prevented from being withdrawn from the mobile phone.

In the present method, at least two methods are available to determine whether the card withdrawal or disassembling of the mobile phone is legal. In one of the two methods, the withdrawal and the disassembling is determined as being legal when the protective cover is detached after the screen is unlocked or decryption is performed; and the withdrawal and the disassembling is determined as being illegal when the protective cover is detached without unlocking the screen or without performing the decryption. In the other one of the two methods, the face is scanned to obtain the face data, the scanned face data is compared to the pre-stored face data. The mobile phone does not perform the image capturing and the loss reporting when the scanned face data matches with the pre-stored face data; and the mobile phone performs the image capturing and the loss reporting when the scanned face data does not match with the pre-stored face data.

In another technical solution, an anti-card-withdrawal and anti-disassembling protective cover is provided. For example, the protective cover is associated with the power key. When the power key is inevitably pressed as long as the protective cover is detached, a program in which the image capturing and loss reporting is triggered by other sensors or keys does not need to be developed independently. In addition, if costs are not taken into account and electronic components are further arranged on the protective cover, more technical solutions for the anti-card-withdrawal and anti-disassembling can be obtained.

It should be noted that the anti-card-withdrawal described in the present disclosure is mainly aimed at illegals to pull out the user card at an initial time, and at one of the separated dual cards that is required to be fixed. In order to obtain the illegal user's phone number as far as possible, the present disclosure is not intended that the anti-card-withdrawal is needed for the mobile phone at any time. On the contrary, one of the ideas of the present disclosure is that illegal uses on the stolen mobile phone are allowed as much as possible under the premise of ensuring privacy, so as to realize the loss reporting by means of the illegal card exchanges. Because once the mobile phone is stolen, the user card that is originally inside the stolen mobile phone will be invalid when the owner goes to the operator to replenish a card, and the anti-card-withdrawal will be meaningless. Similarly, for the mobile phones supporting only the virtual user card, the public write code setting is also to obtain the number of illegal users.

In summary, the starting point of most technical solutions of the present disclosure and related disclosures is that the mobile phone is used more often regardless of whether the mobile phone is lost or stolen, such that sufficient information about the illegal user is obtained. In order to achieve the technical objectives, automatic or passive identification methods are applied to distinguish: usage performed by the legal owner of the mobile phone, usage performed by the illegal user, and various operations attempting to crack the mobile phone. That is, the operating system of the mobile phone is divided into a legal-usage operating system and an illegal-usage operating system. As long as the mobile phone is not completely damaged by the illegal user, enough clues to recover the mobile phone can always be obtained. Further, the desktop and menus in the legal-usage operating system can be encrypted by various levels based on the privacy and security levels. Furthermore, since the usage performed by the owner is different from the usage performed by family members of the owner, the desktop and the menus are graded based on the face data and/or the fingerprint data.

### Beneficial effects

The present disclosure provides a fully-intelligent security mobile phone that the user does not need to worry about losing it. In the present disclosure, following beneficial effects and practical significance are achieved. In a first aspect, the mobile phone fully intelligently performs the loss reporting, ideas of the criminal to steal and misappropriate mobile phones of others can be eliminated completely from various aspects. In a second aspect, the mobile phone has an automatic guidance and usage instructions after being switched on, and therefore, the legal owner can operate the mobile phone more conveniently and quickly. In a third aspect, as a probability of recovering the lost mobile phone is increased, legal personal information and applications in the mobile phone are more secure and private. In a fourth aspect, biometrical recognition technologies are indirectly promoted to be widely applied. In a fifth aspect, drawbacks and mis-operations of the loss reporting technologies in the mobile phone in the art are overcome, and time that the user consumes to register or set up relevant functions is saved, and mis-operations are not triggered. In a sixth aspect, based on the technical solutions, the owner of the mobile phone is warned at an earlier time when encountering potential dangerous situations. Criminals may step back due to difficulties or leave more clues, and therefore, a crime rate is reduced. In a seventh aspect, intelligence of mobile communication terminals is improved, causing a plurality of innovations and technologies of the mobile phones to be applied widely. In an eighth aspect, the technical solutions herein are further refined in practice, technical standards for the mobile phone security are formulated and declared. In a ninth aspect, selling points of mobile phone manufacturer can be increased, Brand reputation can be improved, market shares of the mobile phones can be increased. In a tenth aspect, social significance of the present technical solutions is remarkable, and over time, the field of mobile phones would have no thieves.

If all or most of the technical solutions of the present disclosure are implemented and promoted to be widely applied, the mobile phone always has the opportunity to perform the loss reporting, unless the mobile phone is crushed or broken into pieces. If any mobile phone manufacturer promotes the all or most of the technical solutions of the present disclosure and related disclosures, corresponding technical standards can be formed and implemented comprehensively, and theft of mobile phones can be completely eliminated.

### DETAILED DESCRIPTION

To make the objectives, technical solutions, and advantages of the present disclosure clearer and more understandable, the present disclosure is described in further detail below by referring to various application scenarios. It is to be understood that the specific implementations and embodiments described herein are only for explaining the present disclosure and are not intended to limit the present disclosure. All other embodiments, which are obtained by those skilled in the art based on the embodiments in the present disclosure without making creative work, shall fall within the scope of the present disclosure.

It is noted that the present disclosure is developed from multiple perspectives and directions around a technical purpose of providing a more secure mobile phone that can be used more conveniently. Since overall to-be-achieved technical objectives are generally consistent and related with each other, various technical solutions are combined in one generalized patent application.

### Embodiment 1:

A mobile phone is a daily object that is commonly carried around and possesses the most advanced technology. The mobile phone has potentials to fulfill various demands. It is increasingly difficult to lose and steal the mobile phone, as long as issues related to mobile phone security are continually explored and implementations thereof are actively promoted. Therefore, the present disclosure provides an embodiment of a fully intelligent security mobile phone that may be prevented from being stolen and lost.

The mobile phone is fixedly arranged with an anti-withdrawal user card device. That is, a physical user card can only be inserted into and cannot be withdrawn out of the mobile phone, unless the mobile phone is disassembled; or a virtual user card is secured inside the mobile phone without any card tray. The mobile phone is further arranged with: a screen unlocking password; a registered cloud account; and/or a loss-reporting number that is quickly bound to the mobile phone; and a corresponding intelligent loss reporting operating system, where the screen unlocking password and the registered cloud account are synchronously set.

The mobile phone is fixed with the anti-withdrawal user card device or a built-in eSIM card that is inherently configured in the mobile phone and is not restricted by any operator.

The screen unlocking password and the cloud account that are synchronously set mean that, when the mobile phone is firstly switched on and used, the mobile phone guides the user to set the screen unlocking password and register the cloud account synchronously. The screen unlocking password may be a numeric password and may be the same as a login password for the cloud account.

Quickly binding the loss reporting number may also be referred to quickly binding an emergency contact number. That is, the emergency contact number may be the same as the loss reporting number, which may be set synchronously.

The corresponding intelligent loss reporting operating system includes: a loss reporting program when the mobile phone is abnormally used; a secret loss reporting program when a battery power of the mobile phone is less than a threshold; a loss reporting program for preventing the mobile phone from being disassembled; a loss reporting program for preventing the mobile phone from being wiped; and a delayed switching-off program or a pseudo switching-off program of the mobile phone; and so on.

The above corresponding intelligent loss reporting operating system may be different from the Android and Apple operating systems. In the present disclosure, when the mobile phone is required to be switched off, to be wiped, to be restored to factory settings, and so on, the above operations are performed only when the mobile phone enters the private interface after unlocking the screen; or when correct passwords are input; or when the mobile phone is manipulated through the cloud account. The power key of the mobile phone is mainly configured for switching on the mobile phone, brightening the screen, restarting the mobile phone, performing an SOS alarm, and so on.

Other differences between the above corresponding intelligent loss reporting operating system and the Android and Apple operating systems include the following. In the present disclosure, menus in interfaces of the mobile phone are divided into public menus and private menus. The privacy menus may be further classified into a double-encrypted or multi-encrypted menus. Double encryption for the double-encrypted menus may be achieved by: two fingerprint data; or a password and a biometric data, such as a numeric password and a fingerprint data for double-encryption/decryption.

The public interface in the corresponding intelligent loss reporting operating system may include a code name of an emergency contact and a code name of a loss reporting contact, and real contact numbers thereof are not displayed.

The corresponding intelligent loss reporting operating system may further include a function usage instructions, a security warning program, a security warning key, and a program that allows the mobile phone to be remotely manipulated in various manners, and so on.

The mobile phone being remotely manipulated in various manners may include: the mobile phone being reported as being lost, the mobile phone being collaboratively shared through the cloud account in a screen-mirror manner, the mobile phone being promoted with template information or videos, the mobile phone self-activating location sharing, the mobile phone being remotely controlled, the mobile phone being monitored, and so on.

The cloud account that operates closely and cooperatively with the above corresponding intelligent loss reporting operating system is also required to be strictly protected. Double-encryption or multi-encryption may also be set for the cloud account. In particular, it is very necessary to add biometrical data identification (especially fingerprint data) for logging in the cloud account on a computer side. Further, friends and relatives log in, by double verification of the loss-reporting mobile phone, the cloud account to query page information that is not protected by the double-encryption.

The mobile phone may be a dual-card or multi-card mobile phone. However, in the present embodiments, the dual-card or the multi-card is achieved by arranging separated card positions. At least one user card is a built-in user card, or the mobile phone is fixed with at least one anti-withdrawal user card device. The rest of the card positions allows a card to be inserted in or withdrawn out.

For the dual-card or multi-card mobile phone in the embodiments, the corresponding intelligent loss reporting operating system further includes: a program for automatically locking and guiding a modification or simultaneous modification of the user card PIN code; a loss reporting program for preventing the user card of the mobile phone from being illegally withdrawn and replaced; and a program for locking up a phone card inserted by an illegal user, and so on.

The dual-card or multi-card mobile phone may be configured to: register two cloud accounts that are associated with each other; or register only one cloud account. An account name of the only one cloud account is a phone number corresponding to a main physical user card that can be separated from other user cards.

In the embodiments, the mobile phone is able to disconnect from a network as long as the user card is not out of fees under normal circumstances, by being configured the built-in user card or being fixedly arranged with the anti-withdrawal user card device. Furthermore, the mobile phone synchronously set the screen unlocking password and registers the cloud account; logs in the mobile terminal account; and/or quickly binds to the emergency contact number. In this way, after the mobile phone is stolen or lost, functions involving the privacy of the owner and the security of the mobile phone are locked up, and various loss reporting information are transmitted back to the owner or friends and relatives of the owner. Furthermore, the corresponding intelligent loss reporting operating system of the mobile phone enables any operation performed on the mobile phone by the illegal user to be determined as an illegal operation, and enables the mobile phone to perform the loss reporting and to be manipulated even when the illegal user does not operate the mobile phone. In addition, the mobile phone is automatically switched off when the battery power is lower than a threshold. In this way, the mobile phone can be automatically switched on with sufficient battery power (when a micro nuclear battery is widely applied to mobile phones, this problem does not need to be considered again). If, many years later, the mobile phone being automatically switched off when the battery power being below the threshold becomes a common standard, the lost mobile phone can be searched for through future "artificial intelligent Internet of Things (AIoT)"-related technologies even if the mobile phone is not charged for a long period of time. For example, low-power intelligent connection between the mobile phone and various smart appliances sends unique identification and/or location information obtained from the intelligent connection to the cloud account of the mobile phone; or various smart appliances obtain the unique identification and the location information of the mobile phone and send it to a database of the lost mobile phone, which is then associated with the cloud account.

### Embodiment 2:

The main purpose for the illegal user to obtain the mobile phone is to use the mobile phone. As mobile phones enter the intelligent era, all current smart phones require a password or fingerprint recognition or face recognition to unlock the screen. This embodiment starts with screen unlocking to further provide an implementation where loss reporting is conducted when the illegal user tries to unlock the screen of the mobile phone.

After the illegal user obtains the lost or stolen mobile phone, in order to use or to determine whether the mobile phone is able to operate, the illegal user must press the power key or touch a fingerprint sensor, and in the art, the screen of the mobile phone that is locked enters an interface in which an alphabetic-numeric password or a fingerprint data is required to be input for unlocking the screen. In this case, the illegal user may enter a guessed password or touch the fingerprint sensor or consider whether to continue performing any operation. In the present disclosure, when the illegal user enters the guessed password or touches the fingerprint sensor, the screen of the mobile phone displays a public interface containing a public menu, and at the same time, the mobile phone secretly captures an image and sends the image, the location of the mobile phone, and the fingerprint data of the illegal user to the cloud account. When the illegal user is considering whether to continue performing any operation, as password or the fingerprint data is not input within a certain period of time, the mobile phone secretly captures the image and send the image and the location of the mobile phone to the cloud account. The certain period of time may be 10 seconds, which is shorter than an automatic screen-locking time length. When the mobile phone enters the public interface and an operation is performed on the public menu, the mobile phone secretly captures images at time intervals and sends the images and the location of the mobile phone to the cloud account. An initial time interval may be 5 minutes. When the illegal user's purpose is to enter the private interface, the illegal user may continuously scroll pages in the public interface to query the privacy menu. Since there is no private menu option in the public interface, the illegal user, after seeing a prompt that requires the illegal user to enter the fingerprint data or the password again, may input a wrong password or wrong fingerprint data or fails to input any password or fingerprint data within the certain period of time. In this case, the mobile phone secretly captures the image; sends the image, the location of the mobile phone, and a manipulation command collection to the loss reporting number; and calls the loss reporting number.

In addition, a manipulation command in the manipulation command collection is sent to the lost or stolen mobile phone only from a mobile phone that is bound as a loss-reporting mobile phone, and subsequently, the lost or stolen mobile phone is manipulated. That is, when the mobile phone is bound to the loss reporting number, a program of the mobile phone automatically creates a signaling interface to receive the manipulation command. Specifically, the lost or stolen mobile phone may send a text message having the manipulation command collection to the loss-reporting mobile phone, and the loss-reporting mobile phone sends a certain command to the signaling interface of the lost or stolen mobile phone through a link, such that the lost or stolen mobile phone receives the command and is manipulated.

Undeniably, in the above embodiments, there is a possibility of the owner or the friends and relatives of the owner performing a mis-operation. However, when they develop a habit of not easily touching mobile phones of others, the mis-operation can be avoided as much as possible. Of course, when mobile phone manufacturers perform the implementations of the present disclosure, variations can be made. Actual function after the variations may result in less mis-operations.

In addition, when the mis-operation of sending information to the cloud account and a capacity of the cloud account are not too much considered, in the present disclosure, the mobile phone captures an image for loss reporting as long as the mobile phone is used; or the mobile phone determines whether it is the owner currently using the mobile phone based on the face recognition or fingerprint recognition; or the mobile phone captures the image, sends information such as the image and an address to the cloud account and enters the public interface, when the password is input, regardless of whether the password is correct or not. Further, the cloud account may perform the face recognition or iris recognition on the received image with a pre-stored image, and when the received image matches with the pre-stored image, the cloud account sends a command to instruct the mobile phone to enter a second-level encrypted menu of the private interface.

Of course, the face recognition or iris recognition may be performed directly on the mobile phone. However, regardless of whether the recognition is performed on the cloud or the mobile phone, twice verifications based on the unlocking information to access the second-level encrypted menu certainly enable the mobile phone to be more secure.

### Embodiment 3:

The present embodiment provides a secret loss reporting triggered by the face recognition attempting to unlocking the screen, which is less detectable by the illegal user. When the illegal user gets the lost or stolen phone, it is inevitable that the illegal user presses the power key or touches the fingerprint sensor, in order to use the mobile phone; or to determine whether the mobile phone is able to operate; or to switch off the mobile phone, and so on. For the mobile phone that has been pre-stored with the face data for unlocking the screen, the mobile phone may enter a secret face scanning state. In the secret face scanning state, the secret face scanning is performed when the first screen is displayed, and/or when the mobile phone is restarted or switched on again (automatically switched on in a non-charging state, or automatically switched on at a preset time point). When the scanned image data matches with the pre-stored face data, the mobile phone enters an in-use state without secret image capturing. When the scanned image data does not match with the pre-stored face data or the scanning is not completed within a certain period of time, the mobile phone secretly captures the image and sends information such as the image, a voice recording, and the address to the cloud account or to the loss reporting number, and the screen of the mobile phone enters the public interface or other states.

When the scanning is not completed within the certain period of time due to the camera being blocked, the mobile phone may stay in the first screen or turns off the screen, and does not automatically capture an image or the voice recording.

It is known that accuracy of the face recognition is lower than that of the fingerprint recognition or password verification. Even if the image data scanned by the mobile phone matches with the pre-stored face data, it is suggested that the mobile phone enters the public interface even in the in-use state. Subsequently, when the illegal user tries to enter the private interface, the loss reporting triggered by the attempt to unlock the screen through the fingerprint or the password may be performed.

In the embodiments, the face recognition is mainly configured to determine whether to initiate the image capturing and the loss reporting.

In a case that the mobile phone performs the secret face scanning when the first screen is displayed, the mobile phone enters a pending call page when an icon menu of the emergency contact number is selected. Similarly, when the icon menu of the emergency contact number is available in the public interface, the mobile phone enters the pending call page when the icon menu is selected.

### Embodiment 4:

As described in the above embodiments, the face scanning may be secret scanning in which the mobile phone does not display any scanning identifier, and the image capturing may be secret capturing in which brightness of the screen can be automatically adjusted. For a mobile phone without a fingerprint sensor, the screen unlocking relies on the face data and the numeric password. In this case, when a security function is required to be added to the mobile phone, the face data is not only the screen unlocking information but also a basis for determining whether the mobile phone needs to be reported stolen. That is, after the power key is pressed, the mobile phone displays the first screen and enters the secret face scanning state. When the scanned image data matches with the pre-stored face data, the mobile phone is unlocked to enter the in-use state. When the scanned image data does not match with the pre-stored face data or the scanning is not performed within the certain period of time, the mobile phone secretly captures the image and sends information, such as the image and the address, to the cloud account or to the loss reporting number, and the mobile phone still displays the first screen. When the screen of the mobile phone is scrolled. Further, the mobile phone enters: a page requiring the numeric password to be input for unlocking; or a wallpaper; or the public page. When the wallpaper or the public page is displayed, the mobile phone automatically adjusts the brightness of the screen, secretly captures images at time intervals, and sends information such as the images and the address to the cloud account or to the loss reporting number. When the page requiring the numeric password to be input for unlocking is displayed, and when the input password is correct, the mobile phone enters the in-use state. When the input password is incorrect, the mobile phone displays "password error" or enters a screen-unlocked state; automatically adjusts the brightness of screen of the mobile phone; secretly captures images at time intervals; and sends information such as the images and the address, to the cloud account or to the loss reporting number.

### Embodiment 5:

The difficulty of performing the loss reporting based on face recognition lies in focus scanning and image quality when the face image is captured in a dark night scene. In addition to the above functions in which the brightness of the screen is automatically adjusted, the mobile phone may be further combined with the latest front QPD all-pixel precision focusing technology in the art. Compared with ordinary PD focusing, the present embodiment may apply all the pixels to participate in focusing to achieve 100% focusing density, which greatly improves comprehensive performance of the focusing, and the focusing in the dark light scene does not need to be worried. With a closed-loop motor and a dual AF autofocus capability, an AI texture portrait algorithm is activated, such that a face can be quickly and accurately focused, scanned, and photographed by performing the front QPD all-pixel precision focusing and zero-latency shutter (ZSL) technology, under various brightness environments, various complex texture scenes, and various distances and postures.

The above enhancement in the face recognition and capturing technology in the dark light scene and the above application of the 3D face recognition technology promotes the implementation and popularization of the loss reporting based on the face recognition. The present embodiment includes the following operations.

The user firstly registers the cloud account, and logs in the mobile terminal account, and/or sets the loss reporting number.

Subsequently, the screen unlocking information is input to and stored in the mobile phone, and the screen unlocking information includes the face data for recognition.

After completing the above operations, when the power key is pressed or when the mobile phone receives a phone call, the brightness of the first screen of the mobile phone is automatically adjusted, and the mobile phone enters a front QPD all-pixel precision focusing scanning state.

When the scanned image data matches with the pre-stored face data, the mobile phone unlocks the screen and enter the in-use state.

When the scanned image data does not match with the pre-stored face data or the face is not scanned within the certain period of the time, the front camera of the mobile phone performs QPD all-pixel precision focusing scanning to secretly capture an image, and sends information such as the image and the addresses to the cloud account and/or to the loss reporting number; and the mobile phone stays on the first screen or enters other non-private in-use states.

For additional information, a rear camera and/or other cameras of the mobile phone may also capture images and send the captured images to the cloud account.

Although the front QPD all-pixel precision focusing technology can solve the difficulty of face scanning and image capturing at the dark night scene, the security of face recognition still needs to be improved. It is suggested that thermal imaging recognition may be added in addition to the 3D technology to achieve the face recognition, and focal temperature measurement is applied to counteract a situation in which the face recognition verification is cracked based on a simulated face model.

### Embodiment 6:

In order to ensure that the mobile phone has sufficient power to complete the loss reporting, the present disclosure further provides a mobile phone that can automatically secretly performs the loss reporting when the battery power of the mobile phone falls below a threshold.

In the embodiments, when the battery power of a built-in battery of the mobile phone is consumed to half, the screen of the mobile phone may display a charging prompt. When 60% of the battery power is consumed, the mobile phone may display a remind of charging on the screen and/or through voice and by providing limitations to: a game application; a video browsing application; and other applications. When 60% of the battery power is consumed, the screen of the mobile phone may display a prompt (or not) that the mobile phone has a low battery power and will be switched off soon; or display another prompt asking whether or not to switch off the mobile phone, and verification of the unlocking information (the alphabetic/numeric password, the fingerprint data, the face data, etc.) is performed to determine whether to switch off the mobile phone. The mobile phone is in the standby state when the unlocking information matches with the pre-stored unlocking information. The mobile phone is switched off when the unlocking information does not match with the pre-stored unlocking information or the unlocking information is not input within the certain period of time.

In addition, when the mobile phone enters the standby state and performs the secret loss reporting, the mobile phone may automatically send the loss reporting information to the cloud account in the standby state, where the loss reporting information includes the location of the mobile phone, the image and the voice that are captured/obtained secretly, and so on.

Further, the mobile phone is automatically switched off after several minutes, and may send the loss reporting information to the cloud account and/or to the loss reporting mobile phone after the mobile phone is secretly switched on at a preset or system-default time point. Further, the mobile phone may receive a manipulation command to accept to be manipulated to be switched off and/or to be automatically secretly switched off, and wait for: a next switching-on caused by a press on the power key; a next secret switching-on at a preset time point; and/or a next secret switching-on due to being charged.

For the switching-on at a preset time point or switching-on upon charging, when the battery power of the mobile phone activates communication-limiting functions, such as a flight mode before the mobile phone is switched off, the mobile phone may be configured with an auto-reset cancellation restriction on the communication-limiting functions.

After the power key is pressed to switch on the mobile phone, when 80% of the battery power is consumed, the mobile phone is again switched off and secretly performs the loss reporting; and waits for: the next secret switching-on at the preset time point; and/or the next secret switching-on caused by charging. However, the mobile phone is not switched on when the power key is pressed.

In addition, in the case that the mobile phone is illegally placed in a Faraday bag; or wrapped by an object that is configured to shield, attenuate, or interfere wireless signals, such as tinfoil or aluminum foil, the mobile phone is unable to find a network within a certain period of time after the automatic switching-on. In this case, the mobile phone may be automatically switched off after a shorter period of time to preserve as much power as possible, or the mobile phone may initiate a self-destruction program after being automatically switched on but before running out of power. The self-destruction program may be disregarded when the mobile phone manufacturer has developed associated tracking of important components of the mobile phone through the cloud account.

### Embodiment 7:

For a mobile phone that can be remotely controlled to be disabled (i.e., the mobile phone can no longer operate normally), after the illegal user obtains the mobile phone, the main purpose of the illegal user may be to disassemble the mobile phone to obtain components thereof. Similarly, for a mobile phone that cannot be remotely controlled to be disabled, in an illegal second-hand mobile phone industry chain, the mobile phone is mostly disassembled and assembled into a new phone. Therefore, in order to achieve the anti-theft of the mobile phone to a certain extent, it is necessary to cut off the illegal disassembling.

In order to overcome the illegal disassembling, an electric lock may be applied to lock an outer case of the mobile phone, and the loss reporting is performed in response to the illegal disassembling. However, the electric lock occupies a larger space, resulting in the mobile phone being unable to be exquisitely designed.

In order to achieve a better layout of an internal space of the mobile phone, the present disclosure further provides an embodiment in which a mobile phone performs the loss reporting in response to the illegal disassembling through a photosensitive sensor. An entire device body inside the mobile phone is fixedly arranged with the photosensitive sensor, and the mobile phone is installed with a corresponding light-sensitive switching-on program. When a rear cover of the mobile phone is detached, the entire device body is light-sensitively switched on, and the camera continuously captures images and sends the images or videos, the location of the mobile phone, and other information to the cloud account and/or to the loss reporting number. To prevent the camera of the mobile phone from being intentionally damaged or obscured before the disassembling, a camera may be arranged at the interior of the mobile phone. In addition, after the loss reporting information is sent, a voice of "Please do not disassemble the mobile phone illegally, your location and photo information has been recorded, please stop the illegal disassembling immediately" is played.

When the mobile phone is disassembled in the standby mode, the photosensitive sensor directly drives the camera to continuously capture images and send the images or videos and the location of the mobile phone to the cloud account and/or to the loss reporting number.

When the illegal user continues to disassemble the mobile phone, the mobile phone may initiate a self-destruction program to destroy the mobile phone.

The entire device body refers to the entirety of the mobile phone except for the screen or the rear cover (of a straight phone, in an example), and an operation of detaching screws is also required to be performed to disassemble the entirety of the mobile phone.

### Embodiment 8:

As the mobile phone power technology develops, the mobile phones in the art meet demands of a longer standby time length, and a do-not-disturb (DNB) program of the mobile phones can be set automatically. A large number of users of the mobile phones in the art do not switch off the mobile phones for a long period of time under non-special circumstances. However, when the mobile phone is stolen, the illegal user is worried about being discovered and usually switches off the phone or withdraws the user card after obtaining the mobile phone. Since a certain tool is needed to withdraw the user card and a protective case of the mobile phone obstructs the user card from being withdraws, withdrawing the user card is more or less time-consuming and energy-consuming. Therefore, in public places, when the illegal user successively steals or picks up the mobile phone and desires to unlawfully possess the mobile phone, the most urgent operation performed by the illegal user is to switch off the mobile phone.

Therefore, the present embodiment provides a technical solution in which the mobile phone is switched off based on a maze. The mobile phone is switched off through a screen unlocking or encryption menu. An attempted switching-off operation results in a deceiving fake switching-off when the screen unlocking fails or verification of the encryption menu fails.

Specific implementation details are as follows. The power key (similar to the Recovery operation) is long-pressed, and the mobile phone enters a restarting screen-displaying state (a second restart delay within a short period of time) and a switching-off screen-displaying state (pseudo switching-off, switching-off based on the mase, fake switching-off, or second-delayed switching-off). In the above screen-displaying state, a voice prompt may be plated. When a restart function is clicked, the mobile phone secretly captures an image (and record a fingerprint); sends the image, the iris data (and fingerprint data), and the location information to a database established in a cloud server, which takes the corresponding mobile phone number as the account; and is restarted. When the switching-off function is clicked, the mobile phone secretly captures an image; sends the image and the location information to the database established in the cloud server, which takes the corresponding mobile phone number as the account; and enters a next-level pseudo switching-off prompt state. When the prompt is clicked, the mobile phone secretly captures an image; sends the image and location sharing information to the emergency contact number; and enters a further next-level pseudo switching-off prompt state. When the further next-level pseudo switching-off prompt is clicked for confirmation, the mobile phone secretly dials the emergency contact number; enters a secret-standby and remote-control state (preferably, the mobile phone may be switched off 30 minutes later); and sends, after an appropriate delay, information to the emergency contact number to indicate that the mobile phone has been pseudo switched off. The present concept of the pseudo switching-off and the loss reporting is also applicable to: mobile phones having the eSIM card and an iSIM card; tablet computers; and cloud-based business halls.

The technical solutions of the switching-off based on the maze may be various. For example, a switching-off menu is set in the public interface of the mobile phone, and when the switching-off menu is clicked, the above operation operations are repeated.

A sub-menu subordinating to the switching-off menu may be set to require password inputting. The mobile phone may be switched off when a correct password is input. When a wrong password is input, the mobile phone may be delayingly switched off after performing the loss reporting. A password needs to be set for the switching-off menu in the public interface. Although the switching-off password may be programmed to be the same as the unlocking password, it is still relatively troublesome and not secure enough. Therefore, the switching-off in the present disclosure is preferred to be operated on the function menu subordinating to the screen unlocking interface.

The essence of the present technical solution is to confuse the illegal user, such that the mobile phone cannot be immediately switched off after being stolen, the illegal user can be caught in the shortest possible time, and evidence images of the crime can be obtained. Similar technical solutions may be applied for illegal wiping, illegal restoration of the mobile phone to the factory settings, and so on. For the illegal wiping (wiping through a computer), an encrypted entrance is added to allow the mobile phone to be switched on when being charged and to perform the loss reporting.

In addition, when the illegal user acknowledges the technical solution of the switching-off maze, the illegal user may press the power key for a plurality of times in a short period of time. In this case, the mobile phone plays a high alarm tone (during which a volume key and the power key are disabled) or secretly dials the emergency contact number during playing the high alarm tone.

The Recovery mentioned in the above similarly refers to the phone wiping by pressing the power key and the volume key or re-establishing a system to restore the factory settings, which is also a confusing switching-off state or other confusing states. A real entrance for restoring the mobile phone to the factory settings is set in a menu after the screen is unlocked.

Further, the mobile phone may be set with two systems. That is, one of the two systems is an encrypted security system that cannot be wiped easily and has no manipulation entrance for wiping. Programs relating to the security of the mobile phone are fixedly set within the encrypted security system. The other of the two systems is an application system that can be wiped or restored to the factory settings after the screen is unlocked, and a plurality of applications are installed in the application system.

### Embodiment 9:

For the mobile phone, which has registered the cloud account, logged in to the mobile terminal account, and/or bound to the loss reporting number, and recorded face data to unlock the screen, the technical solution of pressing the power key to attempt switching off the mobile phone and to report loss of the mobile phone is relatively simple. The power key is long-pressed, and the mobile phone enters the secret face scanning state. When the scanned image data matches with the pre-stored face data, the mobile phone enters the in-use state, the switching-off menu is selected to switch off after the screen of the mobile phone is unlocked. Alternatively, after the screen of the mobile phone is unlocked, the switching-off menu in the public interface is selected, a switching-off password is input to the switching-off menu in the public interface to switch off the mobile phone. When the scanned image data does not match with the pre-stored face data or the face scanning is not completed within the certain period of time, the mobile phone secretly captures the image; sends the image, the address, and other information to the cloud account or to the loss reporting number; and enters the public interface or enters other states. Further, the power key is long-pressed, and the mobile phone enters a re-starting prompt state.

For the mobile phone that pre-stores the face data to unlock the screen, in the technical solution in which the mobile phone performs the loss reporting when the power key is pressed to attempt to switch off the mobile phone, no switching-off option may be triggered when the power key is pressed. When the screen is unlocked and the switching-off menu is selected, the mobile phone can be switched off. Alternatively, when the switching-off menu is selected and decryption is performed, the mobile phone can be switched off. Similarly, no switching-off option may be set in the mobile phone having the switching-off menu, and only a restart option is remained.

In the present embodiment, the switching-off function triggered by long-pressing the power key (or other physical keys) is canceled. When the illegal user attempts to long-press the power key, the mobile phone performs the loss reporting due to the mobile phone being illegally used. The present embodiment may be implemented with the Embodiment 9. That is, it is determined, based on the face recognition, whether performing the pseudo switching-off or the delayed switching-off and the loss reporting.

In addition, for better protection against the illegal user, in a non-frozen state of the mobile phone, the switching-off function triggered by long-pressing the power key may be modified to be the mobile phone playing a high alarm tone and/or the mobile phone flashing at high brightness. Continuously pressing the power key may be referred to the following security warning embodiments.

### Embodiment 10:

Design of secret operations of the mobile phone may be various. The present embodiment, in combination with actual usage of the mobile phone, provides a new screen unlocking concept and technical solution.

In the present embodiment, the mobile phone sends information, such as the mobile phone number, to the cloud server and/or to an email address regularly or when the mobile phone is being abnormally touched. All function menus in the public interface of the mobile phone can be normally used, during which the mobile phone secretly captures images; records information, such as the fingerprint data and the iris data; and uploads important information, including a contact number called from the stolen mobile phone or receiving messages sent from the stolen mobile phone, to the cloud account. Similarly, when the mobile phone is remotely controlled to be in the lost state, the above operations are performed.

When the mobile phone enters the private interface from the public interface, a guidance prompt is displayed. When a wrong password or biometric data is input to unlock the screen, or when the wrong password or biometric data is input twice successively, the mobile phone secretly captures the image; sends the image and the location to the database established in the cloud server which uses the corresponding contact number as the account (or the emergency contact number); and enters a new interface without any data information. The new interface without any data information is manipulated, and important and personal information are uploaded to the cloud.

The mobile phone may directly enter the public interface from the private interface, which is achieved by sliding the screen from a left to a right.

In addition, a dialing menu is available in each of the public interface and the private interface. A difference between the dialing menu in the public interface and the dialing menu in the private interface is that no dialing history is shown in the public interface, or only code names are shown, such as an important contact A, an important contact B, and an important contact C. All real contact numbers and information records can only be seen by entering the dialing menu in the private interface. That is, all the private information can only be seen by the legal owner or the friends and relatives that are authorized by the owner. Other users cannot have access to the private information at all. Although the other users can only see the code names, they can dial the code names or send messages to the code names to contact persons corresponding the code names.

In the dialing menu in the public interface, it is default that dialing and text messages are made only to the important contacts A, B or C. Alternatively, in the dialing menu in the public interface, except the important contacts and distress calls such as 110 and 120, dialing to any other contact number is not allowed; alternatively, the operator is activated to allow the instant mobile phone to dial to other contact numbers by hiding the contact number of the instant mobile phone, and a dialing duration is limited.

In addition, when the legal owner of the mobile phone manipulates the mobile phone through the cloud account, no information about the legal owner is remained. In this way, the illegal user is confused and has to voluntarily return the mobile phone to the legal owner, otherwise the illegal user may be under secret surveillance.

The above describes hierarchical management on the interfaces and function icon menus from the perspective of the mobile phone being abnormally used. In the contrary, in the case that the mobile phone is normally used, after the power key is pressed or the mobile phone is manually shaken, the mobile phone displays the public interface. The public interface can also be operated by the illegal user, but information and important traces left during the illegal operation are recorded in various functions in the private interface and uploaded to the cloud server. The legal user performs the fingerprint recognition to enter the private interface directly. A part of the private and encrypted portion in the private interface may be further classified into a secondary private and encrypted portion or even a tertiary secondary private and encrypted portion.

Further, in order to allow the user to have a more convenient and fast usage experience and to obtain more information about the illegal user, the interfaces of the mobile phone may be under hierarchical management. The interfaces include: a public interface in which the screen does not need to be unlocked (in the public interface, the contact number of the instant mobile phone is hidden to dial a contact number, the dialing is terminated at a preset time; phone calls are invisible; and information is invisible. Recorded information can be checked by entering the private. When an emergency contact number calls the instant mobile phone, the contact number is not displayed); a private interface that needs to be unlocked by the fingerprint recognition and is popped out directly (when the fingerprint data does not match with the pre-stored fingerprint data, a new interface without any data information is entered); interfaces of important images, secure payments, and secure settings (where information is accessible, emergency dialing and message texting can be made, the privacy of the legal owner is not influenced, and there is no risk of asset loss) that need to be unlocked through the biometric recognition (the fingerprint data, the face data, the iris data) and the password verification (or two fingerprint recognitions, performed by the front camera and the rear camera respectively, and the front camera for the fingerprint recognition is an under-screen camera. In this way, unlocking can be performed conveniently and quickly, and double-encryption is performed, the mobile phone is more secure).

Navigation of the function menus in the interfaces may be optimized, and in particular, more detailed instructions on how to use the functions of the mobile phone, as well as categorization of application icons and the usage of functions, may be added to the public interface.

The present embodiment provides an innovative technical solution in which the interfaces and menus are under hierarchical management. The user may operate the mobile phone more conveniently, and multi-encryption and double-fingerprint recognition for unlocking are set for important privacy, all of which are significant selling points for mobile phones. In this way, public information is made public at ease, and private information is ensured to be more private, a better customer experience can be achieved. In addition, only when the illegal user is allowed to use the mobile phone more often, there is a better chance to get more information about the illegal user.

In another alternative implementation of the present embodiment, when the correct fingerprint is input to unlock the screen, the mobile phone can enter the public interface and the private interface. However, when wrong fingerprints are successively input, the mobile phone can only enter the public interface and/or an interface showing applications that are to be downloaded.

In the present embodiment, the illegal user is let off in order to be caught. The illegal user is allowed to use the mobile phone more often, such that a probability of recovering the mobile phone is increased, which is quite different from mobile phones such as the iPhone. When the iPhone is stolen, the iPhone is disabled, such that the illegal user cannot use the iPhone.

In addition, the present embodiment can be implemented in combination with a scheme in the Android system, where an emergency call function is set in a secondary interface subordinating with the screen unlocking interface, which is safer than a locked-screen wallpaper having contact information in the iPhone. Especially, in the minus-one screen of the iPhone, the icon menus have a flight mode switch, a Bluetooth switch, and a network connection switch. Although the icon menus allow the owner to perform operations conveniently, the icon menus provide an opportunity for the illegal user to disconnect the network after obtaining the mobile phone and to escape.

Due to various hierarchical management modes on the interfaces of the mobile phone, the present disclosure further provides an implementation method of a secondary interface subordinating to a screen-logging interface. In the present implementation method, after an emergency menu or another similarly-named menu in the screen-logging interface is clicked, the secondary interface is set with an option for dialing and/or sending messages to an emergency contact A, an emergency contact B, and an emergency contact C, where contact numbers thereof are hidden for anti-phishing.

Further, in the case that the mobile phone is not unlocked successfully, when a non-emergency number is dialed, the mobile phone does not dial the non-emergency number and does not send a message to the non-emergency number (and transfers the call to the emergency contact number), and secretly sends the entered non-emergency number to the cloud account and/or to the loss reporting number.

Further, the mobile phone secretly captures a frontal image and sends the image, the location, and other information to the cloud account and/or the loss reporting number.

In addition, there may be other menu options in the secondary interface that do not expose the privacy, such as an induced game menu.

As can be seen in the above, one of the concepts of the present disclosure is to allow the stolen or lost mobile phone to be used illegally within the public interface, but without revealing the privacy of the legal owner and friends and relatives of the owner. In this way, the legal owner or friends and relatives of the legal owner may be prevented from being cheated twice by the criminals, and it is easier to obtain the information of the criminals in order to increase the probability of recovering the lost or stolen mobile phone.

The starting point of the present disclosure is to enable the information and the security of the legal owner to be more fully protected, and to enable information of the illegal user of the mobile phone to be sufficiently exposed. In this way, the illegal user suffers from financial and reputational damages if the illegal user does not return the mobile phone voluntarily.

### Embodiment 11:

In the present embodiment, when the power key of the mobile phone is pressed, the screen displays a first screen having a code name of an emergency contact. Specifically, the first screen contains an icon menu of the emergency loss reporting contact and/or a related prompt. The icon menu contains the code name of the emergency loss reporting contact without displaying a corresponding real contact number. The icon menu and/or related prompts may be further displayed in the public interface.

A title of the icon menu in the first screen may be "Contact information for found phone" or "Reward for found phone", "Emergency contact number", "Close contact number", "Important contact number", and so on. Content of the prompt may be "If you are not the owner of this phone, please click here to call the emergency contact number to contact the owner, thank you!", and so on. The prompt may be displayed directly next to the icon menu; or displayed in a suspended window after short-pressing the icon menu, or displayed after the icon menu is opened.

After the icon menu is clicked and opened, codes of multiple emergency contacts may be displayed, such as a loss reporting contact A, a loss reporting contact B, and a loss reporting contact C". Codes of the emergency contacts may be, such as, a WeChat call link or a WeChat QR code. Once the call link is clicked, friends and relatives that have been set up by the owner of the mobile phone as the emergency contacts may be reached through dialing, such as through a WeChat call. In this way, it is easier for people who find the lost mobile phone to contact the emergency contact, such as the friends and relatives, by scanning the WeChat QR code.

### Embodiment 12:

Combining with the Embodiments 10 and 11, the present embodiment further provides a fully intelligent and secure mobile phone utilizing the first screen, the public interface, and the private interface to perform the secret loss reporting, which is more confidential and secure.

For the mobile phone, which has registered the cloud account, logged in to the mobile terminal account, and/or bound to the loss reporting number, and recorded face data to unlock the screen, in the standby mode, when the power key is pressed, the mobile phone may display the first screen and enter the secret face scanning state. Since the face recognition is mainly applied to determine whether or not to activate the loss reporting, in order to reduce meaningless loss reporting, face data of multiple family members may be recorded. Furthermore, different family members may correspond to different private interfaces.

When the scanned image data matches with the pre-stored face data, the mobile phone displays the public interface.

When the scanned image data does not match with the pre-stored face data or the scanning is not performed within the certain period of time, the mobile phone secretly captures the image; sends the image, the address, and other information to the cloud account or to the loss reporting number; and stays in the first screen or displays the public interface.

When the mobile phone detects a page being scrolled, a password is required to be input or fingerprint data is required to be input for displaying the private interface.

When the input fingerprint data or the password does not match with the pre-stored fingerprint data or the password or the input is not performed within the certain period of time, the mobile phone displays the public interface, and at the same time or later, secretly captures an image and sends the image and the location of the mobile phone to the cloud account.

When the input fingerprint data or the password does not match with the pre-stored fingerprint data or the password or the input is not performed within the certain period of time, the mobile phone displays an induction page, such as for inducing the user to input a contact number for verification. In this way, the contact number of the illegal user may be obtained and sent to the cloud account.

When the mobile phone displays the private interface, and when important menus, such as Alipay or WeChat, are clicked, the mobile phone secretly performs the face scanning.

When the scanned image data matches with the pre-stored face data, the clicked menu is opened or a previously-viewed application page is displayed.

When the scanned image data does not match with the pre-stored face data, the mobile phone guides the user to input the contact number for verification; secretly captures an image; and sends the image, the location of the mobile phone, and the input contact number to the cloud account.

Inducing the illegal user to expose more information in the public interface is an important purpose of the present disclosure. To achieve the purpose, the induction menu may not be displayed in the public interface when the input face data matches with the pre-stored face data. The induction menu may be displayed in the public interface when the input face data does not match with the pre-stored face data. The induction menu may be a fake financial menu, which is only configured to induce a deceived verification login to lead to the loss reporting but does not expose any private content. The induction menu may be an application containing no private content and requiring registration or login.

In the public interface, more improvements may be made to the dialing function of the mobile phone to further induce the illegal user to expose more information. For example, when the face data is matches with the pre-stored face data, the dialing icon menu in the public interface may display call records and a contact directory. When the face data does not match with the pre-stored face data, the dialing icon menu in the public interface does not display the call records and the contact directory (optionally, codes of the emergency contacts may be displayed), and the dialing function is allowed with a limited dialing duration. Further, the dialed contact number is suggested to be hidden.

As a further refined technical solution, before and after the user card being deactivated or illegal card replacement, the interfaces of the mobile phone may display different menus or contents, such that more information of the illegal user may be obtained, and at the same time, the privacy of the owner of the mobile phone is protected.

The present embodiment takes into account the conventional function and application of the mobile phone; achieves secret loss reporting; and further enables the important and private interface to be secondarily encrypted and protected in multiple levels. Therefore, the mobile phone is more secure and can be used more smoothly and naturally.

In the present embodiment, the mobile phone displays different interfaces according to intelligent identification.

### Embodiment 13:

Almost most of the current smartphones have an SOS emergency function. However, the function is only usable in situations of great urgency. Using the SOS emergency function in non-emergency situations may lead to harassment to friends and relatives or emergency organizations. In practice, for some people in a particular situation, early warning may be required in specific situations out of concern or fear, but calling the police may not be necessary. In this case, the present disclosure further provides an embodiment of a security warning of the mobile phone.

In the present embodiment, the mobile phone has registered with the cloud account, logged in the mobile terminal account, and/or bound to the loss reporting number. Further, the mobile phone is arranged with a security warning key, a security warning menu and a corresponding security warning program. The security warning program may perform the following operations.

When the user of the mobile phone is worried or afraid in an environment, the user continuously presses the security warning key for a plurality of times, the mobile phone automatically senses the ambient brightness and determines whether to switch on an infrared camera. Within a certain period of time, the mobile phone captures several images or videos at time intervals as the screen is lit up or not lit up, and sends the images or the videos together and the location information to the cloud account or to the emergency loss reporting number or to a police-reporting number.

In some embodiments, when the security warning key is pressed for 3 times successively, the mobile phone enters the security warning state and sends 4 messages to the cloud account within 20 minutes. When the security warning key is pressed for 4 times successively, the mobile phone enters the security warning state and sends 6 messages to the cloud account within 30 minutes. When the security warning key is pressed for 5 times successively, the mobile phone enters the security warning state and sends 8 messages to the cloud account within 40 minutes. When the security warning key is pressed for 6 times successively, the mobile phone enters the SOS emergency state, such as dialing 120, dialing the emergency loss reporting number; and sends the images, voice recordings, the location, and the sharing request. When the security warning key is pressed for 7 times successively, the mobile phone directly enters the SOS emergency state of dialing 110, and sends the images, the voice recordings, the location information, and the sharing request.

When the security warning key is pressed for 3, 4 or 5 times successively as described in the above, the mobile phone enters the security warning state. In this case, when the security warning key is pressed again, the mobile phone issues a high alarm tone and/or the screen flashes at high brightness. When the security warning key is further pressed for 2 or 3 times successively, the mobile phone enters the SOS emergency state with dialing options or directly enters the SOS emergency state of dialing 110, depending on the number of pressing times.

The above technical solution about the number of pressing times and the number of sent messages is idealized. In practice, the number of pressing times and the number of sent messages need to be developed and tested by considering more factors, and preferred numbers can be subsequently selected therefrom.

In addition, during the security warning state, when the mobile phone senses a high decibel sound, or a violent movement, and so on, the mobile phone automatically enters the state of dialing the emergency contact number, and sends the images, the voice recordings, and the location information.

The security warning key may be the power key, or may be additionally arranged. In some embodiments, the security warning key may be arranged on a side of the mobile phone opposite to the power key.

When different options in the security warning menu are clicked, the mobile phone may enter different security warning states. The options may be, for example, an option in a to-be-unlocked interface to forcibly switch off the mobile phone in response to the battery power being less than a threshold, an option in the public interface to forcibly switch off, through unlocking information verification, the mobile phone in response to the battery power being less than a threshold. Usage of other functions and applications of the mobile phone are not affected when the mobile phone enters the security warning state. However, in the security warning state, when other functional operations are performed on the mobile phone, the screen of the mobile phone may display a suspended menu for entering the emergency state, and the emergency state may be entered in response to the suspended menu being clicked and/or the security warning key being pressed.

The emergency state is not limited by the battery power being less than the above switch-off threshold. In other embodiments, a camera may be arranged on Bluetooth glasses or Bluetooth earphones to execute the security warning and image capturing.

### Embodiment 14

In the embodiments in Embodiment 13, when the security warning key is pressed continuously and rapidly, or when the security warning key is long-pressed continuously having a pressing duration reaching a time threshold, the mobile phone plays a high alarm tone and/or flashes at high brightness. When the illegal user steals the mobile phone, the illegal user tries to switch off the mobile phone by continuously and rapidly pressing the power key or by long-pressing the power key. In this case, the power key of the mobile phone may be configured to serve as the security warning key. However, the specific implementation is required to consider more factors matching with other technical solutions.

### Embodiment 15:

As the science and technology develops, smart phones have increasing number of functions to meet more demands of users. However, due to the increase in functions, operations of the mobile phone are also more complex, such that there are a number of quite humanized functions and quite important functions that are rarely used by the users. It is mainly because the users do not know how to operate the functions or do not know the meaning of the functions, and the users avoid using the functions for avoiding wrong settings.

Therefore, the present disclosure provides function usage instructions, integrated in the mobile phone, such that user of the mobile phone can easily understand and learn to use the various functions of the mobile phone.

The function usage instructions include an initial-switching-on guidance page, a mandatory function guidance program, an optionally-important function introduction, a function catalog page, a page of exhaustive introductions for important functions, a usage guidance program, and so on. The catalog page may include a directory of all the features of the mobile phone. It is recommended that important functions are listed firstly, where the important functions include relatively complex functions, new functions, and so on.

The initial-switching-on guidance page may include a welcome message, an introduction to the mandatory function guidance program, and the optional setting of WIFI passwords for regular locations.

The mobile phone enters the mandatory function guidance program to perform: password synchronization and quick setting; setting the emergency number to be the same as the loss reporting number, and so on.

After the user completes setting the mandatory function guidance program, the mobile phone may pop up further instructions and/or notes on the mandatory function guidance program, and then enter the optionally-important function introduction and the function catalog page. The user may click on the corresponding directory link according to the function introduction to further understand or set up relevant functions of the mobile phone, and may skip the page to allow the mobile phone to enter the standby state.

The initial-switching-on guidance page and the page of exhaustive introductions for important functions may have pictures and/or animations, or corresponding links, such that the user may understand by a glance. The mandatory function guidance program and the important functions guidance program are as simple as possible, such that the user can perform the setting of the necessary functions and achieve respective different demands by performing the least number of operations.

Further, pages that describe important functions and/or notes are popped up after the mobile phone is used and are closed until the user performs a closing operation. The pages may be, such as, suggestions of scientific setup and modification of passwords.

Further, the function introduction pages of the mobile phone may be combined with security functions and security parameter settings to add: common sense for preventing fraud via mobile phones and Internet, security-related application download reminders, and instructions on usage of security software. For example, it is reminded not to manipulate functions in the private menu of the mobile phone when the "network video conferencing" function and the "screen sharing" function are being in use.

### Embodiment 16:

Due to the many disadvantages of physical user cards and corresponding mobile phones in terms of security precautions, soon, there may be a growing clamor for eSIM-only mobile phones. As the mobile phone, which is configured with an eSIM card only, gains operator support, it may be rapidly developed. However, this type of mobile phone can still be lost or stolen, and the eSIM-card-only mobile phone in the art also lacks responding solutions against being stolen or lost. Therefore, the present disclosure provides an embodiment of the eSIM-card-only mobile phone capable of performing the loss reporting.

In the present embodiment, after the eSIM-card-only mobile phone is abnormally operated or receives a loss-reporting instruction, a built-in processing program in the mobile phone automatically performs the secret loss reporting and/or is manipulated.

The eSIM-card-only mobile phone does not have the need for performing the loss reporting caused by card withdrawal or replacement. However, the mobile phone can still be abnormally manipulated when it is stolen or lost. The abnormal operation of the eSIM-card-only mobile phone may include: wrongly or continuously wrongly inputting unlocking information, illegally switching off the mobile phone, and so on. The wrongly inputting the unlocking information may include: wrongly inputting or entering a digital fingerprint data for unlocking the screen, mismatched face data being scanned, and the unlocking information being not input within the certain period of time. In this case, the mobile phone captures the image and performs the loss reporting, or enters a new system interface that can be normally used and manipulated to a certain extent. The new system interface does not contain the information displayed on the locked-screen interface.

The principle of the above technical solution about the new system interface is similar to a dual-domain system, which is called a dual-user (legal and illegal users) interface and system. When the wrong unlocking information is input, the mobile phone enters the new system interface, which is also applicable to the mobile phone having the physical user card. For the mobile phone having the physical user card, in the case that the user card inserted is inserted into the mobile phone and the mobile phone is switched on, when the built-in data information of the user card is inconsistent with identification data that has already been bound to the mobile phone, the mobile phone does not require the screen to be unlocked, and directly enters the new system interface that can be normally used and manipulated to a certain extent and performs the secret loss reporting.

For the normal usage to a certain extent in the present embodiment, the mobile phone cannot receive messages sent from a contact number other than the emergency contacts or cannot receive any message. That is, after the eSIM-card-only mobile phone is abnormally operated or receives a loss-reporting instruction, the built-in processing program automatically prevents the mobile phone from receiving messages from the contact number other the emergency contacts. That is, the mobile phone cannot receive all types of verification messages. It is noted that, if development difficulty is high, the mobile phone can be developed as: not receiving any message.

In the present embodiment, the legal switching-off of the eSIM-card-only mobile phone requires a switching-off operation to be performed through an encrypted menu, and any switching-off attempt without entering the encrypted menu is considered as an illegal switching-off. When the illegal switching-off is performed, the mobile phone performs a deceiving fake switching-off and sends the loss reporting information.

In the present embodiment, the secret loss reporting includes secretly reporting the loss to the loss reporting number and secretly reporting the loss to the cloud account. However, in order to perform the secret loss reporting to the loss reporting number, the loss reporting number needs to be set up in advance to receive the loss reporting information. The loss reporting information includes: the image that is secretly captured and sent, location information of the mobile phone, and an input contact number. The input contact number refers to a number, which is input by the illegal user when the mobile phone is not unlocked correctly and is different from any emergency contact number in the public interface. When the mobile phone is not unlocked correctly, the user cannot dial any contact number other than the emergency contact number in the public interface, and cannot send a message to any contact number other than the emergency contact number in the public interface. The input contact number is sent to the cloud account and/or the loss reporting number.

In the present embodiment, the eSIM-card-only mobile phone is installed with a built-in corresponding program to accept remote control by the cloud account in multiple manners, including: the mobile phone being reported as being lost; the mobile phone being collaboratively shared by the cloud account in the screen-mirror manner, the mobile phone being pushed with information, the mobile phone self-activating the location sharing, the mobile phone being remotely controlled and set, the mobile phone being monitored, and so on.

The starting point of the loss reporting is considering the psychology of the illegal user attempting to obtain information of the legal owner of the mobile phone, such as the phone number, and a countermeasure is performed herein to obtain relevant information of the illegal users.

Based on the above implementation concept, the present disclosure further provides a security and anti-theft mobile phone having the built-in eSIM card. The mobile phone herein is a dual-SIM card mobile phone having the built-in eSIM card and having a card tray in which the physical user card can be installed. The mobile phone is also installed with an anti-theft report loss processing program.

The anti-theft and loss reporting program includes: reporting the loss of the mobile phone to the loss reporting number and/or to the cloud account, fully-automatically dialing to report the loss, and being manipulated to report the loss. All of the above loss reporting are triggered by: the mobile phone being illegally switched off; the user card being illegally replaced; or the mobile phone being abnormally used. In addition, the anti-theft and loss reporting program further includes the mobile phone performing the loss reporting through the eSIM card after the physical user card is withdrawn out of the mobile phone, i.e., illegal card withdrawal.

In addition, the security and anti-theft mobile phone having the built-in eSIM card is equivalent to the mobile phone having the virtual user card, and the mobile phone having a built-in iSIM card.

In the present embodiment, the illegal card replacement refers to the mobile phone detecting that unique identification data set in the user card is inconsistent with pre-bound identification data. In this case, the mobile phone is used normally, however, the mobile phone cannot enter the locked-screen interface and performs the secret loss reporting.

In addition, in the present embodiment, after the physical user card is withdrawn from the mobile phone by the illegal user, the mobile phone performs the loss reporting program through the eSIM card. In view of the fact that the current operator does not support the eSIM card for making calls and sending SMS, the loss reporting program being performed through the eSIM card refers to loss reporting through the mobile network of the eSIM card to the cloud account and/or the WeChat number. In cases where the operator supports the eSIM card for making calls and sending SMS, the mobile phone may secretly dial the loss reporting number.

According to the above embodiments, the WeChat number for receiving the loss reporting information refers to a method of loss reporting by pre-setting QQ and WeChat numbers in the case where the operator does not support the eSIM card for making calls and sending SMS. The mobile phone manufacturers may develop applications similar to QQ and WeChat or applications for communication between cloud accounts and mobile phone accounts to realize the loss reporting.

In the present embodiment, for the mobile phone being abnormally used, before the physical user card is withdrawn and when the mobile phone is not correctly unlocked, the user inputs a contact number that is different from any emergency contact number in the public interface. However, when the mobile phone is not correctly unlocked, the mobile phone cannot make phone calls to or send text messages to any contact number other than the emergency contact numbers in the public interface. In this case, the mobile phone sends the above input contact number to the cloud account and/or to the loss reporting number.

In the present embodiment, the illegal card withdrawal refers to the physical user card being withdrawn when the mobile phone being illegally switched off. In this case, the mobile phone plays a prompt sound, pops up a corresponding reminder, sends the loss reporting information, and subsequently plays a high alarm tone.

Similarly, before the physical user card is withdrawn out of the mobile phone and when the mobile phone is not currently unlocked, the mobile phone can make phone calls but cannot make phone calls to or send messages to the contact number other than the emergency contact numbers in the public interface, but the mobile phone sends the contact number, which is input but is different from the emergency contact numbers in the public interface, to the cloud account and/or to the loss reporting number. Alternatively, loss reporting based on an abnormal use may be performed as described in the above embodiments.

In the present embodiment, when the mobile phone is in different states, such as before and after the physical user card is withdrawn, the interfaces of the mobile phone are under different hierarchical management modes.

Due to operator restrictions, although the mobile phone with the built-in virtual card has a promising vision, currently it has not been completely liberalized. In view of this, it may be considered to equip the mobile phone with a built-in physical user card and/or a virtual card. Regarding the anti-theft and loss reporting for the mobile phone supporting only the built-in user card, the mobile phone registers a cloud account and logs in a mobile phone account, and/or sets a loss reporting number; when the mobile phone detects an abnormal use, the mobile phone enters a corresponding secret loss reporting state according to different abnormal operations, the secret loss reporting state including at least one of: taking pictures and loss reporting in response abnormal use, pseudo power off loss reporting, secret delayed power off loss reporting, loss reporting in response to illegal dismantling of the mobile phone, loss reporting in response to illegal brushing of the mobile phone, timed secret power on and loss reporting followed by secret standby to secret power off, charging and secret loss reporting followed by secret standby. In the secret standby state, the mobile phone accepts a remote-control operation from the cloud account and/or the other mobile phone receiving the loss reporting.

When the mobile phone having only the built-in user card is in a secret loss-reporting state, the mobile phone is allowed to dial only to the loss reporting number and/or the emergency contact number if the user card is not yet deactivated, and the owner of the mobile phone may request the operator to deactivate the built-in user but to retain files (which requires support from the operator).

The main difference between the anti-theft of the mobile phone having only the built-in user card and the anti-theft of the mobile phone having the withdrawable user card is that, no loss reporting programs are set for illegal card withdrawal and replacement, and it is difficult to change the phone number due to requirement of a real name for network business, such that the security precautions of the mobile phone can be easily achieved.

### Embodiment 17:

After the mobile phone is lost or stolen and cannot be recovered within a short period of time, the owner has to report that the user card is lost or directly apply for a new user card. After the lost user card is reported as being lost or is deactivated due to activation of the new user card, the stolen or lost mobile phone has only the WIFI function available and is still able to perform quite a few functions.

Therefore, in the present embodiment, when the mobile phone detects that the mobile phone currently cannot be connected to the mobile network, the mobile phone automatically identifies and connects a free WIFI nearby or connects at time intervals to the free WIFI nearby; prohibits random selection of an MAC address to be switched on; and secretly sends the loss reporting information containing the location of the mobile phone to the cloud server or to a preset called party through a preset instant messaging application. The cloud server performs all-round cloud monitoring (automatic synchronization and remote control) on the mobile phone operating under the WIFI signal (assisted by other signals such as GPS), in order to obtain more data information about the illegal user. When the mobile phone detects that there is no network signal from the user card, and when the mobile phone is operating under the assistance of WIFI signals or other signals such as GPS, the built-in cloud account of the mobile phone can intercommunicate with the cloud server for data transfer or intercommunicate with the cloud server at regular time intervals. Furthermore, when the mobile phone is unable to identify any free WIFI, the mobile phone may guide to connect to an encrypted WIFI or to enter a WeChat or certain verification for performing the secret loss reporting. In addition, satellite positioning and navigation information may be sent through the free WIFI or another WIFI that is searched but is not connected.

When the user card is out of service and the mobile phone is not connected to the WIFI, the present embodiment provides the following technical solutions. In a first aspect, information, such as the MAC address and a carrier of the nearest route or a hotspot, is obtained through a searched WIFI or hotspot. In a second aspect, the mobile phone reversely dials and/or sends messages to the emergency numbers. In a third aspect, the mobile phone sends the location information when the card is withdrawn or when the mobile phone is not connected to a mobile network or the hotspot. That is, as long as the mobile phone is switched on and there is a signal found, coordinates or precise coordinates or information such as the hotspot, the MAC, or the location sharing can be sent. The mobile phone, after being secretly switched on at the preset time point, automatically sends the above information, is accurately positioned on a cloud map, and makes phone calls to the emergency contact number in a card-less manner. However, the above technical solutions may require support from mobile operators.

Theoretically, in the case that the operators relax authentication restrictions on certain specific applications, after the mobile phone is stolen or lost, the mobile phone can be found offline through Bluetooth. In addition, as long as the mobile phone has the battery power, the mobile phone can be located, found, and even accessed online through the mobile communication network, even if the user card is out of fees and out of services and the mobile phone is not connected to any WIFI. For example, online charging fees for the user card is still achievable when the mobile phone is in not connected to the WIFI, and when the user card is out of fees and out of services. In addition, when the operators relax the authentication restrictions or set a whitelist (such as, the cloud system or the cloud account is opened for packet data network gateway), as long as the mobile phone has the battery power, relevant unique code within the mobile phone and a nearby base station, routing, Bluetooth, address codes of wireless network cards in other mobile phones can capture each other through packets through a network (WLAN or the mobile cellular network) searching process. Further, information of the illegal holder of the lost mobile phone may be obtained through the unique information set in the mobile phone and the associated user card, and based on analysis of the number of times and frequencies of mutual "capturing" by means of big data (such as by means of cellular network, WIFI offline search). However, since these technical solutions may infringe on personal privacy if used illegally, special care should be taken. When the privacy is not violated by other technical means, it still requires the support from the operators. When the operators liberalize the authority, the above technical solutions also fall within the scope of the present disclosure.

### Embodiment 18:

After the mobile phone is lost, there are often two situations if the mobile phone is picked up by a person. In one of the two situations, the person who picks up the mobile phone tries to proactively contact the owner of the mobile phone. In the other of the two situations, the person who picks up the mobile phone illegally takes possession of the mobile phone. For the person who is willing to proactively contact the owner of the mobile phone in the art, the person has to wait for the owner to call. When the mobile phone is lost in a moving transportation or the owner is in a business trip, the person picking up the phone may miss the best time to get in touch with the owner.

The present embodiment solves the above problem by developing a function icon menu subordinating to the first screen of the mobile phone. When the function icon menu is clicked and opened, the function icon menu displays options such as an emergency contact A, an emergency contact B, and so on. When either option is clicked, the mobile phone dials the corresponding contact number preset by the owner. When the call is answered, the mobile phone automatically records the call and sends the call to the preset cloud account and/or to the dialed mobile phone. In addition, when the function icon menu subordinating to the first screen is clicked or when the power key of the mobile phone is pressed, the camera of the mobile phone is secretly switched on to scan, identify, capture images and send the images to the cloud account and/or to the emergency contact. It can be understood that when the owner clicks and makes phone calls, no images are necessarily to be captured and sent.

The functions of the mobile phone scanning images, recording voices, and sending the images and the voice recordings are intended to: obtain the information of the person who picks up the mobile phone and wants to proactively contact the owner; prevent malicious calls; and conveniently thank the person who finds the mobile phone and is willing to give the mobile phone back to the owner.

### Embodiment 19:

The present embodiment provides a fully intelligent phone which is easily to be set up, secure against being stolen and lost, secure against the wiping, secure against the disassembling, and bothers harassers and thieves. The mobile phone protects itself and further assists in protecting the owner.

The mobile phone has a function of call answering by a "robot secretary" and a function of security warning when the owner is alone in a late night. The mobile phone has the public interface and the private interface. The mobile phone supports the owner to quickly register the cloud account and quickly bind the loss reporting number. The mobile phone can automatically modify a PIN code of the user card. When the mobile phone is lost and picked up, the mobile phone can quickly contact the owner; or, when the mobile phone is stolen, the mobile phone can perform loss reporting based on the switching-off maze. The mobile phone has enough battery power to be secretly and automatically switched on, to perform the loss reporting, and to accept the remote manipulation. Further, countermeasures are designed against illegal disassembling of the mobile phone.

After the mobile phone has the user card inserted in and is switched on, the user only needs to enter the password, the face data, the fingerprint data, and the emergency contact numbers by following prompts. Further, the mobile phone automatically generates or is associated with the cloud account, binds to the loss reporting number, and modifies the PIN code of the user card, such that the user can use the mobile phone without worrying. Of course, the guidance program is also equivalent to guidance settings after the mobile phone is switched on and used for the first time.

The mentioned security warning when the owner is alone in the late night may operate not only in the late night. As long as the owner feels in danger, the owner can activate the security warning. After the owner selects the security warning, the mobile phone sends the location information, a voice video, and so on, to the cloud account relatively frequently, and issues an alarm sound, plays a sound and a light, or reports to the police according to the actual emergency situations.

In the present embodiment, the mobile phone has two major interfaces: the public interface and the private interface, enabling the mobile phone to be more humanized and to be used more easily and faster. Anyone who presses the power key enables the mobile phone to enter the public interface; quickly dials the emergency contact number that has been set and is hidden; browses and inquires public information, plays video and audio games, and so on. When the owner inputs the fingerprint data, the private interface of the mobile phone may be entered, which includes a social networking application, a shopping application, a payment application, security function setup menus, and so on. Further, the security function setup menus include options of switching-off, data unbinding, restoring to the factory settings, and so on.

When the illegal user desires to switch off the stolen or lost mobile phone, the illegal user exposes the location, an appearance, and the fingerprint data, during the "switching-off" process. That is, when the mobile phone is illegally used or held, the illegal user exposes more information, and the mobile phone is manipulated by the cloud account to bring losses or consternation to the illegal user.

After the mobile phone is stolen, as long as the mobile phone is used without being destructively crushed or destroyed, the trace of the mobile phone and the information of the illegal user can be found. Even if the mobile phone is disassembled, the location of the disassembled mobile phone and the iris or appearance of the person who disassembled the mobile phone are obtained.

The technical details of the mobile phone which are believed to be unique and innovative are already described in detail in the above embodiments, which will not be repeated herein again. The present disclosure is intended to cover any of the features of the documented embodiments, as well as any combination of the individual features.

In summary, the present disclosure makes use of various identification technologies in the art to refine and analyze a normal legal use of the owner of the mobile phone and an illegal possession and use behavior of an illegal holder/user, such that the mobile phone can perform intelligent determination, to automatically identify the owner and non-owners and to report information of the illegal user to the owner. In this way, a human-computer interaction is allowed based on a strict protection of the owner's privacy to obtain more information about the illegal user. In addition, the setting operations are automatically completed by the mobile phone as much as possible, such that the owner can use the mobile phone easily and quickly with a smooth usage experience, and the stolen mobile phone held by the illegal user is a nuisance and trouble. The mobile phone is absolutely focusing on interests of the owner, and is similar to a spy agent to infiltrate into the enemy's interior.

Compared to the related art, the present disclosure also lies in the fact that any illegal attempts are blocked at various points in the process of wiping and disassembling the mobile phone (which may not be considered for mobile phones that are so stable in quality that they do not need to be disassembled and repaired for life, or for mobile phones that are destroyed when they are disassembled). In this way, thieves and illegal users and holders may have no chance to take advantage of the mobile phone, and business of illegal wiping and disassembling may be ended.

The present disclosure and related description may be summarized as follows. After the mobile phone is switched on, the mobile phone is quickly registered for the cloud account; is quickly bound to the loss reporting number; is guided or automatically modifies the PIN code to complete security settings. During performing key operations on the mobile phone, information is synchronized with the cloud account or synchronized in a timely manner. After detecting abnormal usage of the mobile phone, illegal switching-off of the mobile phone, illegal card withdrawal and replacement, discrepancy in identification of the biologically unique data, wrong alphabetic-numeric password being input for screen unlocking, illegal disassembling, illegal wiping, and other abnormal usages, the mobile phone sends the loss reporting information, enters the lost sate, and waits for the automatic and secret switching-on to perform the loss reporting and to be manipulated. To better achieve the anti-theft and loss reporting of the mobile phone, the present disclosure provides a technical solution, in which the mobile phone is forcibly switched on when the battery power is less than the threshold to save power for performing the loss reporting and being manipulated; the network is not disconnected even with the user card is withdrawn; and the network performs the loss reporting when being disassembled. The present disclosure further provides technical solutions of security early warning, image capturing and loss reporting when being reported as lost, proactively face image capturing for the face recognition and the loss reporting. In particular, the face image capturing for the face recognition and the loss reporting may be implemented with slight improvement on the basis of technologies in the art. Alternatively, various sensors may be combined to develop a technical solution in which a machine performs the recognition, triggered by human motions; and the machine moves as the human moves, such that the intelligent face image capturing for face recognition and loss reporting will be more secret and accurate.

The present disclosure and related description are designed to achieve that, when the person picks up the mobile phone, the person does not take it away but proactively contacts the owner of the mobile phone. It aims to solve the anti-theft and anti-stolen problems of the mobile phone. In the present disclosure, the profound technical problems can be solved with a fine logical method, and the related art cannot achieve the same without putting in creative work. The present disclosure can be implemented step by step from simple to complex, from easy to difficult, and implementation costs of each technical solution is not very high. The focus of the present disclosure is on whether the present disclosure attracts interests and respects from mobile phone manufacturers and research-and-development companies.

The enumerated embodiments of the present disclosure are only specific embodiments of the present disclosure to enable those skilled in the art to understand and easily achieve the present disclosure. These embodiments, when being variably modified, are obvious to those skilled in the art, and the technical principles defined herein and the technical problems to be solved can be achieved by other embodiments without departing from the spirit or scope of the present disclosure. Therefore, the present disclosure is not limited to the embodiments and technical solutions shown herein, but rather all equivalent and deliberately inferior technical solutions and implementations are in accordance with the widest technical scope consistent with the principles and innovations applied herein, and in particular encompassing the technical schemes of a fully intelligent security protection for mobile phones with virtual card(s) only.

Finally, it should also be noted that, as the present disclosure and related description are a number of technical solutions under the general technical concept, the embodiments and technical solutions are related and also have special cases with different preconditions. Therefore, there may be contradictory, inconsistent, or incomplete places, which shall be interpreted in combination with the special circumstances and context.

## Claims

1. An implementation method of a fully intelligent and secure mobile phone, comprising:
in response to the mobile phone being switched on and activated for a first time, guiding, by the mobile phone, a user to set up unlocking information for each of a plurality of relevant functions or set up unlocking information for one of the plurality of relevant functions and synchronize the unlocking information for all of the plurality of relevant functions; guiding the user to quickly register and log in a cloud account and/or to quickly bind an emergency loss reporting number; and guiding the user to activate a corresponding intelligent loss reporting operating system;
wherein the unlocking information comprises at least one of: unlocking information for unlocking a screen of the mobile phone, unlocking information for the cloud account, unlocking information of a mobile phone account, unlocking information of PIN, unlocking information for switching off the mobile phone, unlocking information for wiping a system of the mobile phone; unlocking information for disassembling the mobile phone, and unlocking information for legal card-replacement; the unlocking information comprises an alphabetic-numeric password and biometrically unique data, the biometrically unique data comprises:
palm print data, iris data, fingerprint data and face data;
in response to detecting that mobile phone is abnormally used or lost, activating, by the mobile phone, a corresponding loss reporting program in the intelligent loss reporting operating system,
wherein the corresponding loss reporting program comprises at least one of: a loss reporting program triggered by the mobile phone being abnormally used; a secret loss reporting program when a battery power of the mobile phone is less than a threshold; a loss reporting program triggered by an attempt of wiping the system of the mobile phone; a loss reporting program triggered by an attempt of disassembling the mobile phone; an automatic loss reporting program in response to an illegal card withdrawal or replacement; a loss reporting program in response to the mobile phone being reported as lost; a delayed switching-off program or a pseudo switching-off program of the mobile phone; and a loss reporting program without switching off; and
wherein the mobile phone is arranged with a built-in user card and/or is fixedly arranged with an anti-withdrawal user card device.

2. The method according to claim 1, wherein, the intelligent loss reporting operating system further comprises:
after the mobile phone being decrypted correctly or the screen of the mobile phone being unlocked correctly, and determining, by the corresponding intelligent loss reporting operating system, following operations as legal operations: switching off the mobile phone, wiping the system of the mobile phone, disassembling the mobile phone, user card replacement, and restoring the mobile phone to factory settings;
wherein, the intelligent loss reporting operating system classifies function menus in interfaces of the mobile phone into a public interface and a private interface; contents in the public interface are displayed to public, contents in the private interface are displayed only after the screen is unlocked; a call menu in the public interface comprises a code name of an emergency loss reporting contact, a contact number of the emergency loss reporting contact is hidden; when the call menu in the public interface is clicked and a non-emergency contact number is input and dialed, dialing the non-emergency contact number and sending messages to the non-emergency contact number are disabled, and the mobile phone secretly sends the non-emergency contact number to the cloud account and/or to the emergency loss reporting number; or a first screen of the mobile phone comprises an icon menu of the emergency loss reporting number and/or a prompt related thereto; and
the intelligent loss reporting operating system further comprises a security warning program and function keys, instructions of a self-installed function, and a program that allows the mobile phone to be remotely manipulated in a plurality of ways.

3. The method according to claim 1, wherein, the method further comprises:
in a case that the mobile phone is registered with the cloud account, logged in the mobile phone account, and/or bound to the emergency loss reporting number, secretly capturing, by the mobile phone, an image and sending the image and a location of the mobile phone to the cloud account when an input alphabetic-numeric password or input fingerprint data does not match with a pre-stored alphabetic-numeric password or pre-stored fingerprint data of the mobile phone or when the alphabetic-numeric password or the fingerprint data are not input within a certain period of time;
or
in a case that the mobile phone is registered with the cloud account, logged in the mobile phone account, and/or bound to the emergency loss reporting number, displaying, on the screen of the mobile phone, the public interface of the intelligent loss reporting operating system, and at the same time or subsequently, secretly capturing an image and sends the image and a location of the mobile phone to the cloud account, when an input alphabetic-numeric password or input fingerprint data does not match with a pre-stored alphabetic-numeric password or pre-stored fingerprint data of the mobile phone or when the alphabetic-numeric password or the fingerprint data are not input within a certain period of time;
wherein, when the mobile phone detects that a menu in the public interface is being used, the mobile phone secretly captures images at time intervals, sends the captured images and the location of the mobile phone to the cloud account;
when the mobile phone detects that the public interface is continuously scrolled, or detects that another input alphabetic-numeric password or another input fingerprint data does not match with the pre-stored alphabetic-numeric password or the pre-stored fingerprint data of the mobile phone, or detects that the alphabetic-numeric password or the fingerprint data is not input within the certain period of time, the mobile phone secretly captures the image and sends the image and the location of the mobile phone to the emergency loss reporting number, and calls the emergency loss reporting number; and
when the mobile phone detects that an induction menu of the public interface is clicked, the mobile phone guides a user to input a contact number for verification, secretly captures an image and sends the image, the location of the mobile phone, and the input contact number to the cloud account.

4. The method according to claim 1, wherein, in response to running the loss reporting program triggered by the mobile phone being abnormally used,
in a case that the mobile phone is registered with the cloud account, logged in the mobile phone account, and/or bound to the emergency loss reporting number, and pre-stores the face data, the mobile phone enters a face scanning state after a power key of the mobile phone is pressed;
the mobile phone enters an in-use state when face data scanned by the mobile phone matches with the pre-stored face data; and
the mobile phone captures an image; sends the image and a location of the mobile phone to the cloud account and/or to the emergency loss reporting number; and displays a public interface or enters another state, when the face data scanned by the mobile phone does not match with the pre-stored face data or the face data is not input within the certain period of time.

5. The method according to claim 1, wherein, in response to running the secret loss reporting program when the battery power of the mobile phone is less than the threshold,
in a case that the mobile phone is registered with the cloud account, logged in the mobile phone account, and/or bound to the emergency loss reporting number, the mobile phone is switched off or enters a delayed switching-off state and sends loss reporting information to the cloud account in the delayed switching-off state when the mobile phone detects that the battery power is less than the threshold;
after the mobile phone is automatically switched off, the mobile phone is switched on at a preset time point or is switched on or is secretly switched on upon being charged, and subsequently, the mobile phone sends the loss reporting information to the cloud account and/or to the emergency loss reporting number; and
after the mobile phone is secretly switched on, the mobile phone receives a manipulation command and is manipulated to be switched off or to be secretly switched off at a delayed time point.

6. The method according to claim 1, wherein, in response to running the loss reporting program triggered by the attempt of wiping the system of the mobile phone,
an operation of wiping the system of the mobile phone or an operation of restoring the mobile phone to factory settings is performed, through an encrypted menu, on the mobile phone, which is registered with the cloud account, logged in the mobile phone account, and/or bound to the emergency loss reporting number; and
when a physical key is pressed to attempt to wipe the system of the mobile phone or to restore the mobile phone to the factory settings, the mobile phone captures an image and sends loss reporting information to the cloud account and/or to the emergency loss reporting number.

7. The method according to claim 1, wherein, a photosensitive sensor is fixedly arranged on the mobile phone, and the mobile phone is installed with a built-in light-sensitive switching-on program; and in response to running the loss reporting program triggered by the attempt of disassembling the mobile phone, when the screen or a rear cover of the mobile phone is detached, the mobile phone is light-sensitively switched on and activates a camera to capture an image or a video, and sends the image or the video and a location of the mobile phone to the cloud account and/or to the emergency loss reporting number; and
the camera comprises a front camera, a rear camera, and a built-in camera.

8. The method according to claim 2, wherein, in response to running the delayed switching-off program or the pseudo switching-off program of the mobile phone,
the mobile phone, which is registered with the cloud account, logged in the mobile phone account, and/or bound to the emergency loss reporting number, is switched off through an encrypted menu and determines a switching off operation performed by pressing a power key of the mobile phone as a fake switching-off or a delayed switching-off, in a fake switching-off state or a delayed switching-off state, the mobile phone sends the loss reporting information and/or the mobile phone enters a secret loss reporting state;
wherein, the encrypted menu is a switching-off menu in the mobile phone that uses the unlocking information to unlock the screen; or is an encryption switching-off menu in the public interface;
after the mobile phone is switched off at the delayed time point, the mobile phone sends the loss reporting information to the cloud account and/or to the emergency loss reporting number after being switched on or being secretly switched on at the preset time point or being secretly switched on upon being charged; and
after the mobile phone is secretly switched on, the mobile phone receives a manipulation command, and subsequently, is switched off or is secretly switched off at a delayed time point.

9. The method according to claim 2, wherein, in response to running the loss reporting program without switching off,
when a power key of the mobile phone, which is registered with the cloud account, logged in the mobile phone account, and/or bound to the emergency loss reporting number, and pre-stores the face data for recognition, the mobile phone enters a secret face scanning state;
when face data scanned by the mobile phone matches with pre-stored face data in the mobile phone, the mobile phone enters an in-use state; the mobile phone is switched off when a switching-off menu is selected after the screen of the mobile phone is unlocked; or the mobile phone is switched off when a switching-off menu in the public interface is selected and is input with unlocking information;
when face data scanned by the mobile phone does not match with the pre-stored face data or the face data is not input within a certain period of time, the mobile phone secretly captures an image; sends the image and a location of the mobile phone to the cloud account and/or to the emergency loss reporting number; and displays the public interface or enters another state; and
when a power key is long-pressed, the mobile phone enters a restart prompting state.

10. The method according to claim 2, wherein the public interface of the mobile phone further comprises a WIFI setting menu and an induction menu;
the private interface comprises a security function setting menu and a menu of a social application, a shopping application, and a payment application; and
wherein an encrypted menu in the private interface separates out a portion to form a double-encryption portion.

11. The method according to claim 2, wherein the icon menu comprises a code name of the emergency loss reporting number, and the code name is configured to replace the real number, a real name, or a title of a person corresponding to the emergency loss reporting number.

12. The method according to any one of claims 2, 10, or 11, wherein the interfaces of the mobile phone comprise the first screen, the public interface, and the private interface;
when the mobile phone is registered with the cloud account, logged in the mobile phone account, and/or bound to the emergency loss reporting number, and pre-stores the face data, the fingerprint data, and the alphabetic-numeric password; and when the mobile phone is in the standby state and detects that a power key of the mobile phone is pressed, the mobile phone displays the first screen and scans to obtain face data;
when the face data scanned by the mobile phone matches with the pre-stored face data, the mobile phone displays the public interface;
when the face data scanned by the mobile phone does not match with the pre-stored face data or the face data is not input within the certain period of time, the mobile phone secretly captures an image; sends the image and a location of the mobile phone to the cloud account and/or to the emergency loss reporting number; and displays the public interface;
when the public interface is continuously scrolled to reach an interface displaying a prompt of inputting the unlocking information, an alphabetic-numeric password is input or fingerprint data is input; when the input alphabetic-numeric password matches with the pre-stored alphabetic-numeric password or the input fingerprint data matches with the pre-stored fingerprint data, the mobile phone displays the private interface; and
when the alphabetic-numeric password input to the mobile phone does not match with the pre-stored alphabetic-numeric password, or when the fingerprint data input to the mobile phone does not match with the pre-stored fingerprint data, or when the alphabetic-numeric password or the fingerprint data is not input within a certain period of time, the mobile phone remains on the interface prompting to input the unlocking information or returns to the public interface or enters an induction interface; and at the same time or afterwards, the mobile phone secretly captures an image and sends the image and the location of the mobile phone to the cloud account.

13. The method according to claim 2, wherein the mobile phone is arranged with a security warning key and is installed with a security warning menu and a corresponding security warning program; and in response to the security warning program being running:
in a case that the mobile phone is registered with the cloud account, logged in the mobile phone account, and/or bound to the emergency loss reporting number; when the security warning key is pressed for a plurality of times successively, the mobile phone enters different security warning states or emergency police-reporting states according to the number of successive pressing times; or when the security warning menu is triggered, the mobile phone enters a screen-lit-up security warning state that displays a suspended menu;
when, in the security warning states, the security warning key is pressed again for a plurality of times successively, or when the suspended menu is clicked, or when a sensor of the mobile phone senses a signal, the mobile phone enters different emergency police-reporting states according to: the number of successive pressing times, or an operation performed on the suspended menu, or the sensed signal;
when the mobile phone is in the security warning states, the mobile phone sends corresponding warning information to the cloud account; when the mobile phone is in the emergency police-reporting state, the mobile phone sends relevant police-reporting information to the emergency loss reporting number and/or a police number; and
the security warning key is a power key of the mobile phone; when the mobile phone detects that the power key is pressed successively and rapidly or detects that the power key is long-pressed continuously having a pressing duration reaching a threshold, the mobile phone plays a high alarm tone and/or flashes at high brightness.

14. The method according to claim 2, wherein the instructions of the self-installed function comprises:
an initial-switching-on guidance page, a mandatory function guidance program, an optionally-important function introduction, a function catalog page, a page of exhaustive introductions for important functions, and a usage guidance program; wherein the initial-switching-on guidance page and/or the optionally-important function introduction comprises at least one of: texts, images, animations, videos, and related links.

15. The method according to claim 1, wherein the built-in user card of the mobile phone comprises a physical user card or a virtual user card; the anti-withdrawal user card device that is fixedly arranged in the mobile phone comprises a mechanical anti-withdrawal user card mechanism or an electrically-operated anti-withdrawal user card mechanism;
the fully intelligent and secure mobile phone comprises a fully intelligent and secure mobile phone having the physical user card, a fully intelligent and secure mobile phone having the virtual user card, a fully intelligent and secure mobile phone having both the physical user card and the virtual user card, or a fully intelligent and secure mobile phone having two separated card trays.

16. The method according to claim 1 or 15, wherein for the mobile phone having the virtual user card, which has registered the cloud account and logged in the mobile phone account and/or bound to the emergency loss reporting number, after the mobile phone is abnormally operated or receives a loss reporting information command, the corresponding intelligent loss reporting operating system automatically executes loss reporting and warning through a communication network and/or WIFI provided by the virtual user card.

17. The method according to claim 16, wherein the mobile phone having the virtual user card further comprises: a mobile phone that has a plurality of virtual user cards but does not have any physical card tray; the mobile phone is configured to be written with or to download from an air with a plurality of user card information and a plurality of contact numbers corresponding to the plurality of user card information; the user is enabled to select one of the plurality of contact numbers to register the cloud account; after the mobile phone is stolen, the user is enabled to keep one of the plurality of virtual user cards effective for providing a communication network and/or WIFI for automatic loss reporting and warning.

18. A method of realizing a timely contact with an owner or a friend or relative of a mobile phone after the mobile phone is lost, wherein a first screen or a public interface of the mobile phone contains an icon menu and/or a relevant reminder of an emergency loss reporting number;
the icon menu comprises a code name of the emergency loss reporting number, and the code name is configured to replace a real number, a real name, or a title of a person corresponding to the emergency loss reporting contact; the emergency loss reporting contact is dialed by clicking the code name.

19. An implementation method of a mobile phone performing face recognition, image capturing, and loss reporting, comprising:
guiding a user to register a cloud account, to log in a mobile terminal account, and/or to set a loss reporting number;
guiding the user to input and store a password and face data for unlocking a screen of the mobile phone;
the mobile phone capturing a picture and performs a face scanning, when the mobile phone detects that the mobile phone is tilted horizontally up to a certain angle, the mobile phone is being held by a person and is stationary, a power button or home button of the mobile phone is pressed, a specific incoming call is received after the mobile phone is loss reported, the mobile phone is turned on, or a display screen of the mobile phone is being swiped or tapped;
the mobile phone not performing an image capturing for loss reporting, when face data in a face image scanned by the mobile phone matches with pre-stored face data in the mobile phone;
the mobile phone capturing an image and sending the image and a location of the mobile phone to the cloud account and/or the loss reporting number, when the face data in the face image scanned by the mobile phone does not match with the pre-stored face data in the mobile phone, or when the face image is not scanned within a certain period of time.

20. The method according to claim 19, wherein the face image scanning is performed secretly as no scanning identifier is displayed on the screen; and the image capturing is performed secretly with the brightness of the screen automatically adjustable.
